# EUROPEAN PATENT SPECIFICATION

(11) **EP 4 551 810 B1**
(45) Date of publication and mention of the grant of the patent: **15.04.2026**
(21) Application number: 23736606.7
(22) Date of filing: 21.06.2023
(51) Int. Cl.: F03D 7/02, F03D 80/80, F16F 7/10

(54) **WIND TURBINES HAVING DAMPERS WITH TILT MECHANISMS AND METHODS OF DAMPING VIBRATIONS IN WIND TURBINES**
WINDTURBINEN MIT DÄMPFERN MIT KIPPMECHANISMEN UND VERFAHREN ZUR DÄMPFUNG VON SCHWINGUNGEN IN WINDTURBINEN
ÉOLIENNES DOTÉES D'AMORTISSEURS À MÉCANISMES D'INCLINAISON ET PROCÉDÉS D'AMORTISSEMENT DE VIBRATIONS DANS DES ÉOLIENNES

(30) Priority: 08.07.2022 DK PA202270372
(43) Date of publication of application: 14.05.2025
(73) Proprietor: VESTAS WIND SYSTEMS A/S, 8200 Aarhus N (DK)
(72) Inventor: KATZ, Sebastian, 8200 Aarhus N (DK); SAHOO, Nibedita, 8200 Aarhus N (DK); MADSEN, Søren Bøgelund, 8200 Aarhus N (DK); JOHANSEN, Rasmus Sanderhoff, 8200 Aarhus N (DK); ENGELHARDT, Jurgen, 8200 Aarhus N (DK)
(74) Representative: Vestas Patents Department
(86) International application number: PCT/DK2023/050161
(87) International publication number: WO 2024/008255

(56) References cited:
- EP-A1- 2 696 098
- EP-B1- 2 215 356
- US-A1- 2016 252 079

## Description

### Technical Field

The invention relates generally to wind turbines, and more particularly to wind turbine towers, vibration dampers, and methods for damping vibrations in wind turbines.

### Background

Wind turbines are used to produce electrical energy using a renewable resource and without combusting a fossil fuel. Generally, a wind turbine converts kinetic energy from the wind into electrical power. A horizontal-axis wind turbine includes a tower and an energy generating unit positioned atop of the tower. The energy generating unit typically includes a nacelle to house mechanical and electrical components, such as a generator, and a rotor operatively coupled to the components in the nacelle through a main shaft extending from the nacelle. The rotor, in turn, includes a central hub and a plurality of blades extending radially therefrom and configured to interact with the wind to cause rotation of the rotor. The rotor is supported on the main shaft, which is either directly or indirectly operatively coupled with the generator which is housed inside the nacelle. Consequently, as wind forces the blades to rotate, electrical energy is produced by the generator. Wind turbines may be constructed onshore or offshore at locations with significant wind.

To be economical, wind turbines must be capable of sustaining continuous vibration-induced forces over long periods. Vibrations may be induced from internal or external forces and include oscillatory or repeating displacements in transverse, longitudinal, and/or torsional directions of nearly any amplitude and frequency depending on the vibration source. Typically, sources of vibrations can include any single one or a combination of wind acting on the tower (i.e., vortex generation), blades rotating past the tower, rotor rotation, nacelle yaw motion, nacelle imbalances, and imbalances in gearboxes and/or generators, to name a few. Offshore and near-shore installations present an additional vibration source - water movement. Whether the wind turbine is floating or on a foundation structure (e.g., a monopile) directly secured to the ocean floor, water movement is an additional source of vibrations. To make the conditions more difficult, there is often significant misalignment between the wind and the waves. This can cause large loads on the tower in a side-to-side direction, which is generally not present in onshore installations. The forces from any vibration can cause fatigue damage to the wind turbine, and substantial fatigue damage, more than that anticipated in the design, may lead to reduced operational lifetime of the wind turbine tower and/or one or more of its components.

Vibrations at specific frequencies can cause resonance of one or more portions of the wind turbine, particularly in the wind turbine tower. Resonance, where vibrations match a natural frequency of the wind turbine, is a potentially catastrophic event in that vibration-induced forces can exceed structural integrity of the wind turbine. Wind turbine designers therefore consider vibrations, and are particularly aware of resonant frequencies, during the design process. Designers may modify wind turbine structural design to avoid resonance during operation of the wind turbine. As an example, tower wall thickness may be changed to modify the natural frequency of the wind turbine tower. Designers may alternatively or in conjunction with structural modification include devices specifically designed to damp vibrations. These devices, referred to as vibration dampers or dampers, are generally active, semi-active, or passive in their vibration damping. Active dampers apply forces to the structure in a direction opposite of the vibrations through a control system. Passive dampers are tuned to react to vibrations and absorb the wind turbine vibrations of specific frequencies, and semi-active dampers combine features of active and passive dampers.

While wind turbines are generally commercially successful, prolonging the operational life on the wind turbine is desirable. Accordingly, wind turbine manufacturers and operators seek improved wind turbines, and especially improved energy production while overcoming current design limitations including solutions to fatigue damage from vibration while stabilizing wind turbine towers during energy production.

Documents considered during the patent prosecution are i.a.: EP 2 215 356 B1, EP 2 696 098 A1 and US 2016/252079 A1.

### Summary

To address these and other drawbacks, and in a first aspect of the invention, a tubular structure for forming at least a portion of a wind turbine tower of a wind turbine having a vibration damper is disclosed. The tubular structure includes an elongate tubular body having a first end, a second end, and a tower wall extending between the first end and the second end. The first end is configured to be connected to a nacelle of the wind turbine, and the tower wall defines a longitudinal axis of the tubular body. A vibration damper having a central axis is coupled to the tubular structure, for example, to the tower wall inside the tubular body. The tubular structure includes a tilt mechanism operably coupled to the vibration damper and configured to change an orientation of the central axis of the vibration damper relative to the longitudinal axis of the tubular body. The tilt mechanism may be particularly beneficial when the wind turbine tower leans such that its longitudinal axis does not vertically align with gravity.

In one embodiment, the tilt mechanism may include a lateral adjustment mechanism configured to rotate the vibration damper about an axis perpendicular to the longitudinal axis. For example, the longitudinal axis may define a radial plane that intersects the vibration damper, and the tilt mechanism may include a radial adjustment mechanism configured to rotate the vibration damper about an axis perpendicular to the radial plane.

In one embodiment, a support assembly may be rigidly connected to the tower wall and the vibration damper may further include a frame assembly slidably supported on the support assembly. The tilt mechanism may be operably coupled to the frame assembly and to the support assembly whereby operation of the tilt mechanism moves the frame assembly relative to the support assembly. In one embodiment, the frame assembly may be pivotally secured to the support assembly. Moreover, in one embodiment, the frame assembly may be pivotal in a plane in which the tilt mechanism changes the orientation of the central axis. In a further embodiment, the tilt mechanism may be between the frame assembly and the support assembly.

In one embodiment, the support assembly may define a slide surface on which the frame assembly is slidably supported. For example, the slide surface may include an inner slide plane that is perpendicular to the longitudinal axis and first and second outer slide planes on opposing sides of the inner slide plane. Each of the outer slide planes may form an obtuse angle with respect to the inner slide plane. Additionally, slotted flanges may be pivotably secured to the frame assembly and be in slidable engagement with each of the inner and outer slide planes.

In one embodiment, the tilt mechanism may include a pair of supports, with one of the supports coupled to the frame assembly and the other one coupled to the support assembly, and a threaded rod rotatably coupling the pair of supports together. In this embodiment, rotation of the threaded rod changes a distance between the pair of supports.

In a second aspect of the invention, a wind turbine including the tubular structure according to the first aspect described above is disclosed. In one embodiment, the tubular structure may be the wind turbine tower or a portion thereof. For example, in one embodiment, the tubular structure may include a wind turbine tower section, which is connected to other wind turbine tower sections to form the wind turbine tower. The wind turbine tower section having the vibration damper is typically the section closest to the nacelle of the wind turbine.

In yet another aspect of the invention, a method of damping vibrations in a tubular structure configured to form at least a portion a wind turbine tower of a wind turbine is disclosed. The tubular structure includes an elongate tubular body with a first end, a second end, and a tower wall extending between the first end and the second end, the tower wall defining a longitudinal axis of the tubular body, and a vibration damper having a central axis and connected to the tower wall inside the tubular body adjacent to the first end. The method includes erecting the tubular structure so as to be supported at the second end of the tubular body, the longitudinal axis of the erected tubular body having a first orientation, and adjusting the vibration damper relative to the tower wall so that the central axis of the vibration damper has a second orientation relative to the longitudinal axis of the tubular body different from the first orientation.

In one embodiment, adjusting the vibration damper may further include determining an orientation of the longitudinal axis of the tubular body relative to gravity, and rotating the central axis of the vibration damper toward the orientation of gravity. In this embodiment, rotating the central axis of the vibration damper may include rotating the central axis of the vibration damper about an axis perpendicular to the longitudinal axis. In one embodiment, the longitudinal axis of the tubular body may define a radial plane that intersects the vibration damper and rotating the central axis of the vibration damper may further include rotating the vibration damper about an axis perpendicular to the radial plane.

In one embodiment, the tubular body may include a support assembly and the vibration damper may include a frame assembly, the frame assembly being slidably supported on the support assembly, and rotating the central axis of the vibration damper may further include sliding the frame assembly relative to the support assembly. In one embodiment, a plurality of fasteners may connect the frame assembly to the support assembly during operation of the vibration damper, and prior to rotating the central axis of the vibration damper, the method may further include loosening the plurality of fasteners, and after sliding the frame assembly relative to the support assembly, tightening the plurality of fasteners.

In one embodiment, a tilt mechanism may be operable between the support assembly and the frame assembly and rotating the central axis of the vibration damper may further include operating the tilt mechanism. In one embodiment, the tilt mechanism may include a pair of supports, with one of the supports coupled to the frame assembly and the other one coupled to the support assembly, and a threaded rod rotatably coupled to the pair of supports, and sliding the frame assembly relative to the support assembly may further include rotating the threaded rod to change a distance between the pair of supports.

### Brief Description of the Drawings

The accompanying drawings, which are incorporated in and constitute a part of this specification, illustrate one or more embodiments of the invention and, together with a general description of the invention given above, and the detailed description given below, serve to explain the invention.
Fig. 1 is a perspective view of a wind turbine according to embodiments of the invention;
Figs. 2 and 2A are a partial cross-sectional perspective view and a cross sectional elevation view, respectively, of a portion of the wind turbine tower of Fig. 1 depicting a vibration damper according to embodiments of the invention;
Fig. 3 is a plan view of the wind turbine tower and the vibration damper of Figs. 2 and 2A taken along section line 3-3 of Fig. 2A;
Fig. 4 is a front elevation view of the vibration damper shown in Fig. 2;
Fig. 5 is a cross sectional view of the vibration damper of Fig. 4 taken along section line 5-5 in Fig. 4;
Fig. 6 is a left perspective view of the vibration damper according to embodiments of the invention;
Figs. 7 and 8 are bottom perspective views of the vibration damper shown in Fig. 4 illustrating installation of the vibration damper according to one aspect of the invention;
Figs. 9, 10, and 11 are a perspective view, a plan view, and an elevation view, respectively, illustrating a portion of a tilt mechanism according to one embodiment;
Figs. 12A, 12B, and 12C are schematic elevation views during adjustment of the orientation of the vibration damper relative to the tower according to one embodiment of the invention;
Fig. 13 is a disassembled view of the vibration damper with pendulums separated from a frame assembly;
Figs. 13A and 13B are schematic illustrations of oscillation of the vibration damper;
Fig. 14 is a disassembled view showing separation of the pendulums and an end stop removed from a suspended pendulum;
Figs. 15A and 15B are schematic of a volume of activity for movement of the pendulums;
Fig. 16 is a cross sectional view of the pendulums illustrating end stops according to one embodiment of the invention;
Fig. 17 is a cross section of an end stop according to one embodiment of the invention;

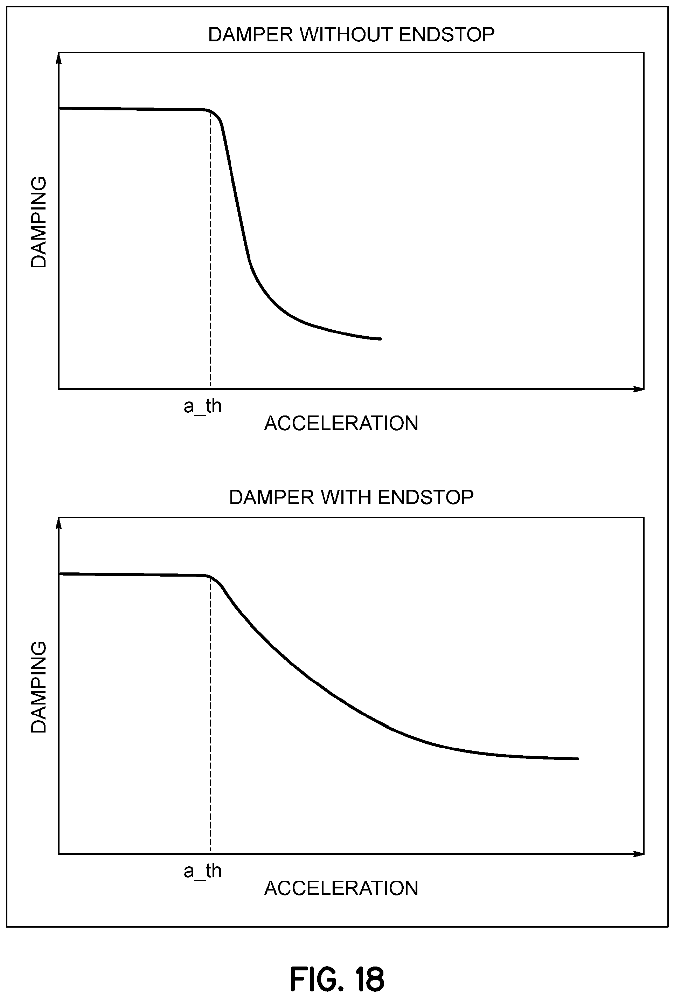

Fig. 18 are graphs of damping versus acceleration of a vibration damper without and with an end stop according to embodiments of the invention;
Fig. 19 is a cross sectional view of the pendulums illustrating end stops and a locking mechanism according to embodiments of the invention;
Fig. 20 is a cross sectional view of the pendulums illustrating a locking mechanism according to embodiments of the invention;
Figs. 21A, 21B, and 21C are cross sectional schematic views of the locking mechanism with Fig. 21A depicting an unlocked position and with Figs. 21B and 21C depicting a locked position; and
Fig. 22 is a mathematical model of a vibration damper according to embodiments of the invention.

### Detailed Description

With reference generally to the figures, aspects of the present invention relate to vibration dampers having simple, compact, and yet robust designs. Advantageously, embodiments of the invention are installed in wind turbine towers but are usable to dampen vibration during all phases of transport and installation where the tower is in an upright orientation and during operation of the tower. As is described in detail herein, the vibration dampers are installed and operate within confined spaces found in the upper portions of the tower while permitting service personnel to access other equipment installed at a higher location in the tower, such as in a nacelle. While service personnel are in the wind turbine, there may be no need to disable or restrict damper operation. Exemplary vibration dampers are adjustable to the orientation of the tower both at the time of installation and over the operational lifetime of the tower for more consistent and efficient operation. The vibration dampers also greatly simplify service and repair procedures for the dampers themselves. Other advantages and benefits to exemplary vibration dampers are described herein.

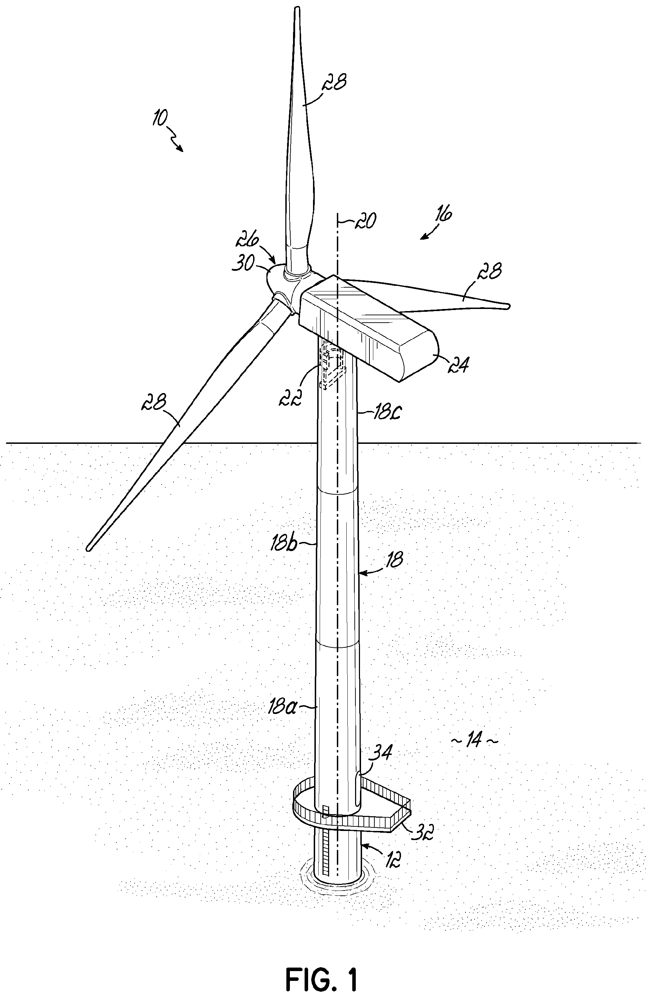

To those and other ends and with reference to Fig. 1, an exemplary embodiment of the invention includes a wind turbine 10, which may be installed at an offshore location, as shown. At that location, the wind turbine 10 includes a transition piece 12 that extends from a foundation pile (not shown) secured in the ocean floor to a location above the ocean 14. Embodiments of the invention are not limited to the transition piece 12 shown in Fig. 1. Other exemplary transition pieces may be utilized in the construction of the wind turbine 10 and in accordance with embodiments of the invention. Another such exemplary transition piece may be referred to as an extended transition piece. Further, while an offshore installation is shown, embodiments of the invention are applicable to onshore and near-shore installations which vary in the type of foundation to which the wind turbine 10 is secured.

With continued reference to Fig. 1, an energy generating unit 16 is elevated above the transition piece 12 by a wind turbine tower 18. The exemplary tower 18 is modular and includes three tubular sections 18a, 18b, and 18c each having an elongate tubular structure with a wall that defines a longitudinal axis. The individual sections have opposing ends (not labeled). When the three sections 18a-c are assembled end-to-end, they collectively define the tower 18 having a tower longitudinal axis 20 about which the energy generating unit 16 rotates via a yaw mechanism (not shown). While a modular tower is shown, embodiments of the present invention are not limited to modular towers. During its installation, the wind turbine tower 18 is secured to the transition piece 12 at one section 18a with the energy generating unit 16 mounted at an opposing end of the wind turbine tower 18 on section 18c.

A vibration damper 22 is installed at a position as high as possible inside the wind turbine tower 18, such as in an upper-most portion of section 18c. In that regard, the damper 22 is located as close to an antinode of a first vibration mode in the tower 18 as possible. The antinode of the first vibration mode is at/near highest level of the tower 18. If the damper 22 is used for second vibration mode damping, the damper 22 or an additional damper could be place as close as possible to an antinode of the second vibration mode. In one embodiment, the vibration damper 22 is located within ±15% of a height of the tower 18 or tower section 18a-c of the selected antinode. By way of further example, the vibration damper 22 is located within ±10% of a height of the tower 18 or tower section 18a-c of the selected antinode, and preferably within ±5% of a height of the tower 18 or tower section 18a-c of the selected antinode. In one embodiment, installation of the vibration damper 22 is within an upper 30% of the wind turbine tower 18 (e.g., in section 18c) so as to provide efficient damping of tower vibrations. By way of further example, the damper 22 may be coupled to the tower section 18c preferably no more than about 15% from the upper end of the tower section 18c, and even more preferably no more than about 5% from the upper end of the tower section 18c. With respect to a tower section, such as tower section 18c, the damper 22 may be installed a distance from an upper end of no more than 50% of the height of the tower section 18c, preferably no more than about 40% of the height of the tower section 18c, and even more preferably no more than about 30% of the height of the tower section 18c. By placing the vibration damper 22 as high as possible in the wind turbine tower 18, the vibrations may be more efficiently dampened using smaller masses (e.g., lower weight pendulums) in the vibration damper 22. The top part of the tower is often very crowded and vibration dampers are thus typically relegated to lower portions of the tower. This, in turn, requires larger mass pendulums to effectuate damping.

The energy generating unit 16 includes the components of the wind turbine 10 that transforms the kinetic energy of the wind into electrical energy. In this regard, the energy generating unit 16 typically includes a housing or nacelle 24 and a rotor 26 having a plurality of blades 28 (e.g., three blades) mounted to a central hub 30 and extending radially therefrom and a generator (not shown) for converting mechanical energy into electrical energy. The wind turbine blades 28 interact with the wind to rotate the rotor 26 and thus rotate the generator. The energy generating unit 16 may further include a drive train (not shown), including a gear arrangement, interconnecting the rotor 26 and the generator. The generator and a substantial portion of the drive train may be positioned inside of the nacelle 24 of the wind turbine 10. In addition to the generator, the nacelle 24 typically houses miscellaneous electrical equipment and components required for converting wind energy into electrical energy and various components needed to operate, control, and optimize the performance of the wind turbine 10. The generator in the nacelle 24 while producing electrical energy for commercial distribution also provides the electrical power for operation of the wind turbine 10, including electrically powering the miscellaneous components in the nacelle 24 and at lower levels down the tower 18, including on platform 32.

While embodiments of the vibration damper 22 are shown installed in the tower 18 and are described in conjunction with operation of the wind turbine 10, vibration dampers described herein may be utilized during storage and transport of one or more tower sections 18a, 18b, 18c to a location for installation of the wind turbine 10 and prior to installation of nacelle 24 and rotor 26 during the installation of the wind turbine 10. This may be advantageous because there is a risk of vortex induced vibrations on the tower 18, or on any single one of the sections 18a-c, before the nacelle 24 is installed. Thus, following construction of a section 18a-c, the vibration damper 22 may be installed to absorb tower vibration and reduce fatigue on the section 18a-c even before the wind turbine 10 is installed. The vibration damper 22 of the present invention may thus also be installed and operated in one or more tower sections 18a-c once erected. For example, tower sections 18a-c are typically individually erected prior to assembly of the tower 18, such as during storage (e.g., erected quayside on a stand awaiting transport) and/or during transport (e.g., erected on a transport ship) and prior to their installation. The vibration damper 22 may optionally be dismantled after the wind turbine 10 has been assembled and reused in another tower.

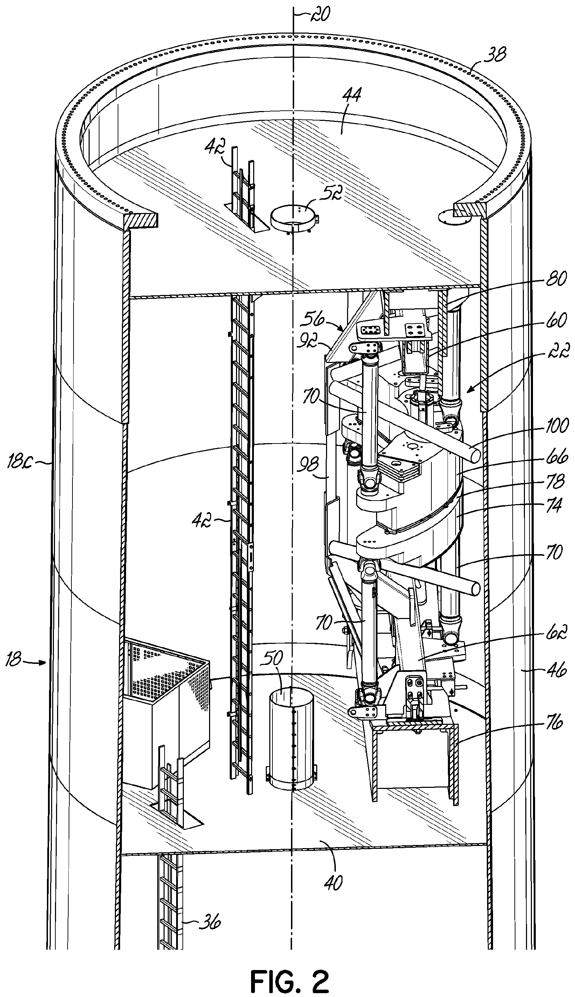

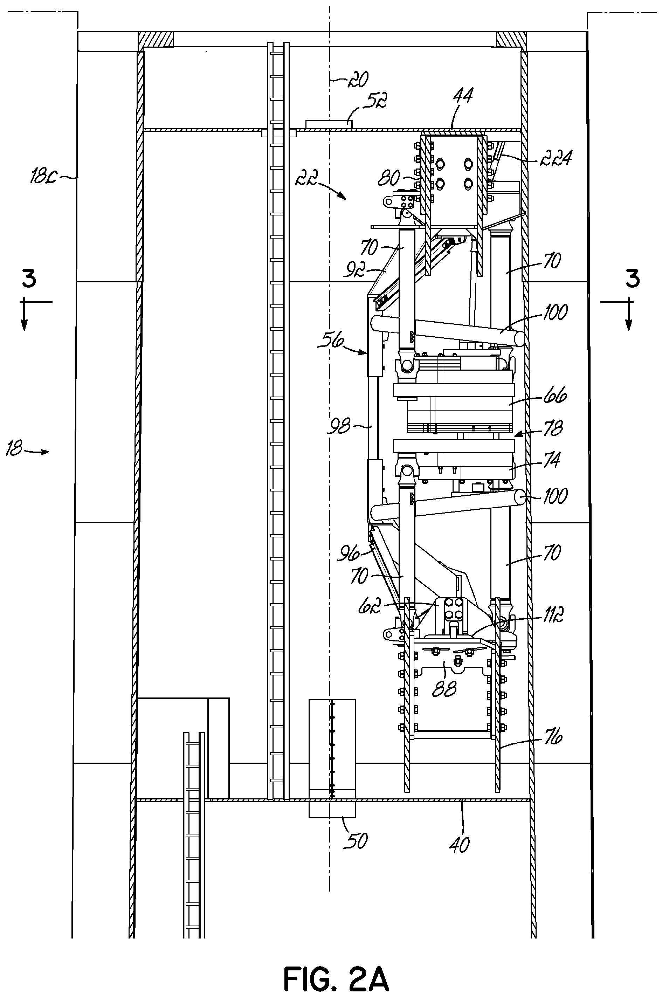

With reference to Fig. 1, at a location above the ocean 14, the external platform 32 provides access via doorway 34 to an interior of the wind turbine tower 18. Once in the interior of the wind turbine tower 18, and with reference to Figs. 1 and 2, service personnel climb an internal ladder 36 to access an interior of the nacelle 24. Between the nacelle 24 and the external platform 32, the tower 18 generally includes one or more internal platforms. For example, the ladder 36 leads to an internal platform 40, shown in Fig. 2. The internal platform 40 is at the upper-most end of tower section 18c. Specifically, the platform 40 is located adjacent the nacelle 24, which is rotatably secured to a flange 38 that defines an upper end of the tower 18 (and may be one end of the tower section 18c). The internal platform 40 covers substantially the entire area within a cross section of the tower section 18c. Another ladder 42 extends from the platform 40 to another platform 44. In the embodiment shown, the internals of the nacelle 24 are accessible directly from platform 44. The internal platform 40 is therefore two levels below the nacelle 24. Equipment for maintenance, such as a service lift (not labelled), and operation of the wind turbine 10 may be located on the platform 40 and/or the platform 44 and are accessible to service personnel via ladders 36 and 42.

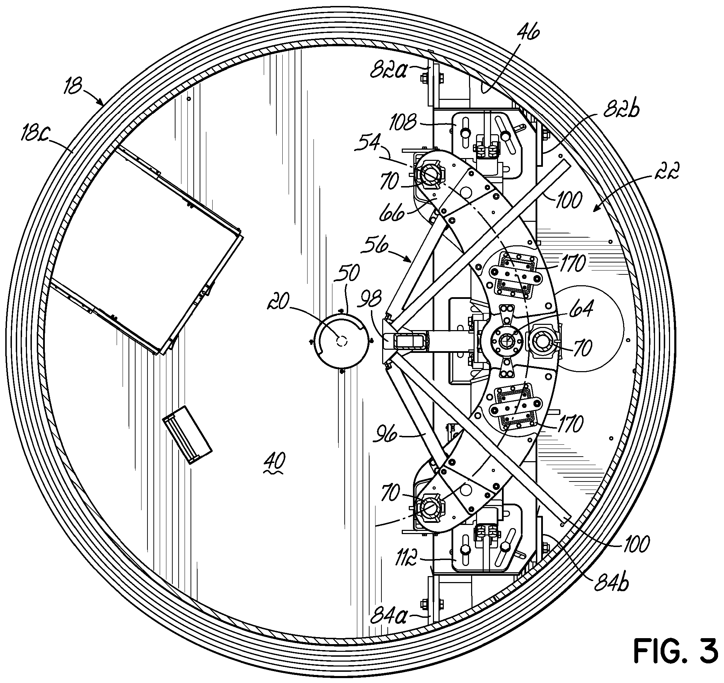

As shown in Figs. 2, 2A, and 3, in exemplary embodiments, the vibration damper 22 is accessible at platform 40 and is in the vertical space between the internal platforms 40 and 44. With respect to the horizontal direction, the vibration damper 22 is located between the tower longitudinal axis 20 and an outer tower wall 46 that forms tower section 18c. In this regard, the vibration damper 22 may be a sufficiently safe distance opposite the tower longitudinal axis 20 from ladders 36 and 42. Service personnel may then climb onto the platform 40 to operate equipment and to access the ladder 42. Access to the interior of the nacelle 24 is not prohibited while the vibration damper 22 is operational.

Further, the vibration damper 22 does not inhibit routing of cabling necessary for efficient operation of the wind turbine 10. For example, openings 50, 52 in platforms 40, 44, respectively, are centrically aligned with the tower longitudinal axis 20. High-voltage cables (not shown), which electrically couple the generator in the nacelle 24 to electrical connections down the tower 18, extend through the openings 50, 52. Advantageously, the vibration damper 22 is installed to one side of the openings 50, 52. The vibration damper 22 is therefore contained completely on one side of the tower 18 and so rerouting the cabling or changing the location of the openings 50, 52 is not necessary when using vibration damper 22. By way of example only, a footprint of the vibration damper 22 on the platform 40 is one-half or less of the area of the platform 40. With this arrangement, exemplary vibration dampers described herein are usable at the top-most levels of existing wind turbine towers in confined spaces, and may be installed between centrally located, existing high voltage cabling and the tower wall. The exemplary damper 22 may be attached to the tower wall 46, to the platform 40 and/or the platform 44, or to a combination of the wall 46 and one or both platforms 40 and 44.

With reference to Figs. 3, 4, and 5, in the exemplary embodiment, the vibration damper 22 includes a frame assembly 56 for movably suspending an upper mass 66 and a lower mass 74 in spaced relationship to one another. The upper mass 66 forms a suspended pendulum and the lower mass 74 forms an upstanding pendulum, described below. To achieve that arrangement, the frame assembly 56 includes an upper frame 60 and a lower frame 62 for movably suspending the masses 66 and 74, respectively. At their equilibrium positions in the frame assembly 56, the masses 66 and 74 define a central axis 64. While described below, in the exemplary embodiment, the orientation of frame assembly 56 is adjustable relative to the tower 18 so that an orientation of the central axis 64 can be changed during, and at any time following, installation of the vibration damper 22.

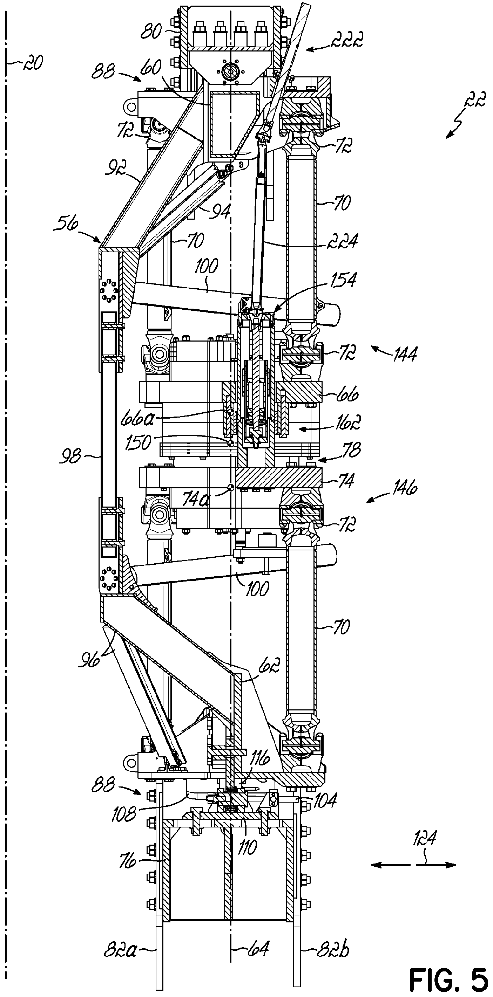

With reference to Fig. 5, a centroid 66a of the upper mass 66 and a centroid 74a the lower mass 74 define the central axis 64 of the vibration damper 22 when the masses 66, 74 are at their equilibrium, rest positions (i.e., not oscillating). The central axis 64 is shown spaced from but is substantially parallel to the longitudinal axis 20 of the tower 18. In other words, the central axis 64 is offset from the longitudinal axis 20 in a direction toward the wall 46. As is shown in Figs. 2, 2A, 3, and 5, the central axis 64 is spaced radially outward from the longitudinal axis 20. With this arrangement, the masses 66 and 74 are isolated to one side of the space available in the tower section 18c at the internal platform 40. That is, the masses 66 and 74 only occupy space to one side of the opening 50 between the opening 50 and the tower wall 46. As is described below with respect to oscillation of the vibration damper 22, neither of the masses 66 and 74 is displaced (e.g., swings) into the space between the openings 50 and 52 so that high voltage cables extending between openings 50 and 52 are not disturbed by the vibration damper 22 as it dampens tower vibrations.

Further, as is shown in Figs. 2, 3, and 6, the compact, space saving design is facilitated by the shape of the masses 66, 74. In the exemplary embodiment shown in Fig. 3, the masses 66 and 74 are similarly shaped with each having a bean shape when viewed along the central axis 64. Stated in another way, the masses 66 and 74 may have an annular, arcuate shape when viewed in cross-section. This is shown generally by arc 54 drawn to trace a mid-line of an annular, arcuate shape of the masses 66 and 74 in Fig. 3. By way of example, the arc 54 has an arc measure of equal to or less than 180°, and by way of further example, the arc 54 may have an arc measure from 60° to 145° or more particularly, from 90° to 150° or substantially 120°. In the exemplary embodiment shown, the arc 54 of each mass 66, 74 shares a common center with the tower longitudinal axis 20 and may be located with the arc 54 equally dividing a distance between the outer wall 46 and the opening 50. Stated in another way, the masses 66 and 74 have a similar curvature in a plane perpendicular to the longitudinal axis 20 to the outer wall 46 and are each uniformly spaced apart from the outer wall 46 and from the opening 50 along their respective arc lengths. This arrangement maximizes operational space for movement of the masses 66 and 74 during oscillation described below. And, when viewed in a radial direction, for example from the longitudinal axis 20, the masses 66 and 74 are roughly rectangular shaped. However, embodiments of the invention are not limited to the cross-sectional and radial configurations shown. Specifically, the masses 66 and 74 may each, or one or the other, may vary in its spacing between the outer wall 46 and the opening 50 relative to the outer wall 46. This may occur if the mass 66 and/or mass 74 have a non-annular cross-sectional configuration. So, while the exemplary vibration damper 22 is shown having an annular, arcuate shaped masses 66 and 74 in planess perpendicular to the axis 20, embodiments of the invention are not limited to that configuration. Other configurations contemplated include any regular volumetric shape that is symmetrical, such as a circular cross-sectional shape.

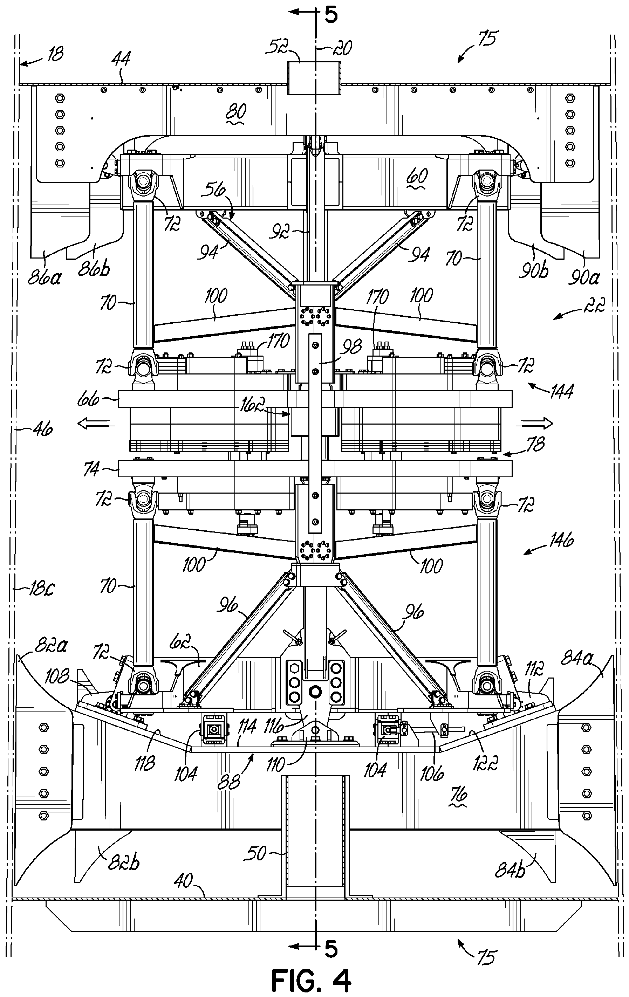

As shown in Figs. 4, 5, and 6, the frame assembly 56 movably secures the masses 66 and 74 to the tower 18. The frame assembly 56 movably couples the upper mass 66 to the upper frame 60. In the exemplary embodiment, pendulum rods 70 with cardan joints 72 at each end thereof movably couple the upper mass 66 to the upper frame 60. The pendulum rods 70 and joints 72 define a generally arcuate movement path for swinging motion of the upper mass 66 when exposed to vibration of the tower 18. The orientation of the upper mass 66 and pendulum rods 70 and joints 72 form a suspended pendulum and is described below.

In the exemplary embodiment, the frame assembly 56 movably couples the lower mass 74 to the lower frame 62. Similar to the upper mass 66, the lower mass 74 is movably coupled to the lower frame 62 via pendulum rods 70 and cardan joints 72. The pendulum rods 70 and joints 72 define a generally arcuate movement path for swinging motion of the lower mass 74. The orientation of the lower mass 74 and pendulum rods 70 and joints 72 form an upstanding pendulum, also referred to as an inverted pendulum, and is described below. As shown in the exemplary embodiment, the vibration damper 22 is a passive, tuned dual-pendulum mass damper.

The lower mass 74 and the upper mass 66 are each capable of oscillating along their arcuate paths relative to the frame assembly 56. Those arcuate paths are defined by the pendulum rods 70. In one embodiment, the pendulum rods 70 are the same length in the suspended pendulum and in the upstanding pendulum. The arcuate movement of the masses 66 and 74 are therefore mirror images of one another. That is, when the masses 66 and 74 swing outwardly from equilibrium, the upper arc pathway includes an upward displacement or directional component to movement of the upper mass 66 and the lower arc pathway includes a downward displacement or directional component to movement of the lower mass 74. While the exemplary embodiment depicts three pendulum rods 70 and multiple joints 72, embodiments of the invention are not limited to any specific configuration and/or specific number of connections between the upper mass 66 and the frame assembly 56 or between the lower mass 74 and the frame assembly 56.

With continued reference to Figs. 4, 5, and 6, the frame assembly 56 has a C-shaped configuration. From each end point of the "C", one of the masses 66 and 74 is secured. A gap 78 at the equilibrium position is maintained between the upper mass 66 and the lower mass 74. As is described below, the arcuate movement of the masses 66, 74 in response to tower vibrations causes the separation between the masses 66 and 74 to change from the equilibrium gap 78. That is, the separation increases with increased vibration of the tower 18. With this relative movement capability, the vibration damper 22 is capable of damping vibrations of the tower 18.

In the exemplary embodiment and with reference to Figs. 4, 5, and 6, the frame assembly 56 further includes an interconnecting frame member 92 that extends from upper frame 60 to the lower frame 62 and so provides a rigid connection between the two opposing frames 60, 62 to form the C-shape of the assembly 56. In the exemplary embodiment, the interconnecting frame member 92 has an upper tripod-like member 94 and a lower tripod-like member 96 joining a backbone member 98. This construction distributes the extreme loads produced by the masses 66, 74 to maintain the gap 78 between the two masses 66, 74 at equilibrium and during oscillation.

Referring to Figs. 4, 5, and 6, the damper 22 includes pairs of dampers. For example, linear dampers 100 may be pivotably coupled to the frame member 92 at one end. Therefore, as the masses 66, 74 swing along their arcuate pathways, they cause movement of the linear dampers 100. The linear dampers 100 resist the oscillating motion of masses 66, 74 and dampen vibration.

With reference to Figs. 4, 5, 6, and 7, the frame assembly 56 is movably secured to the tower wall 46 via support assemblies 75. The support assemblies 75 include support beams 76 and 80, which are immovable with respect to the tower 18. The support beams 76 and 80 thus transfer vibration from the tower wall 46 to the vibration damper 22. The lower support beam 76 extends between and is secured to opposing flange pairs 82a, 82b and 84a, 84b, which are attached to the tower wall 46. As shown in Fig. 4, the lower support beam 76 is spaced apart from the platform 40. In one embodiment, the vibration damper 22 may not rest directly on the platform 40. In another embodiment, the vibration damper 22 may be supported directly by the platform 40 and/or by platform 44 instead of being directly attached to the tower 18. The lower support beam 76 therefore elevates the masses 66, 74 in a direction toward the nacelle 24. The lower frame 62 is adjustably coupled to the lower support beam 76 at three locations, described below. These locations permit movement of the frame assembly 56 generally and the lower frame 62 specifically relative to the lower support beam 76.

At the other end of the frame assembly 56, that is, at the upper frame 60, the upper support beam 80 is secured to the outer wall 46 by opposing flange pairs 86a, 86b and 90a, 90b. The upper support beam 80 extends between and is rigidly secured to opposing flange pairs 86a, 86b and 90a, 90b, which are attached to the tower wall 46. The upper support beam 80 may support the platform 44 shown in Fig. 4. The upper frame 60 is movably coupled to the upper support beam 80 at three locations. These locations permit movement of the frame assembly 56 generally and the upper frame 60 specifically relative to the upper support beam 80.

Advantageously, the central axis 64 of the vibration damper 22 is movable relative to the tower longitudinal axis 20. The longitudinal axis 20 of the tower 18 is rarely in perfect vertical alignment with respect to Earth's gravity at installation, and the tower 18 rarely remains in its installed position during the life of the wind turbine 10. That is, the tower 18 orientation may change with time. Embodiments of the invention advantageously include a tilt mechanism 88 by which the central axis 64 of the vibration damper 22 can be moved relative to the longitudinal axis 20, such as during installation of the wind turbine 10 or after operation of the wind turbine 10. Thus, at the time the wind turbine 10 is constructed or after a period of operation, the vibration damper 22 may be reoriented with respect to the tower 18. By way of example, the tilt mechanism 88 is operable to reorient the central axis 64 in the direction of gravity and out of alignment with the longitudinal axis 20 of the tower 18 to compensate for movement of the tower 18 over time. With sufficient parallel alignment of the central axis 64 with gravity, the vibration damper 22 more efficiently dampens tower vibrations and reduces tower fatigue. Alignment of the central axis 64 with gravity also maximizes symmetrical side-to-side displacement of the masses 66, 74 during oscillation, described below. While exemplary embodiments of the tilt mechanism 88 are described with respect to the orientation of the tower 18, the tilt mechanism 88 is not limited to use with respect to the tower 18. For example, the vibration damper 22 may be installed into a tower section. That tower section may be erected and stored at quayside to await loading onto a ship for transport to an installation location. While at quayside, the orientation of the tower section will likely be out-of-vertical with gravity. The vibration damper 22 may be oriented with respect to gravity in the section at quayside and then reoriented once the tower section is assembled with other sections to form the tower 18.

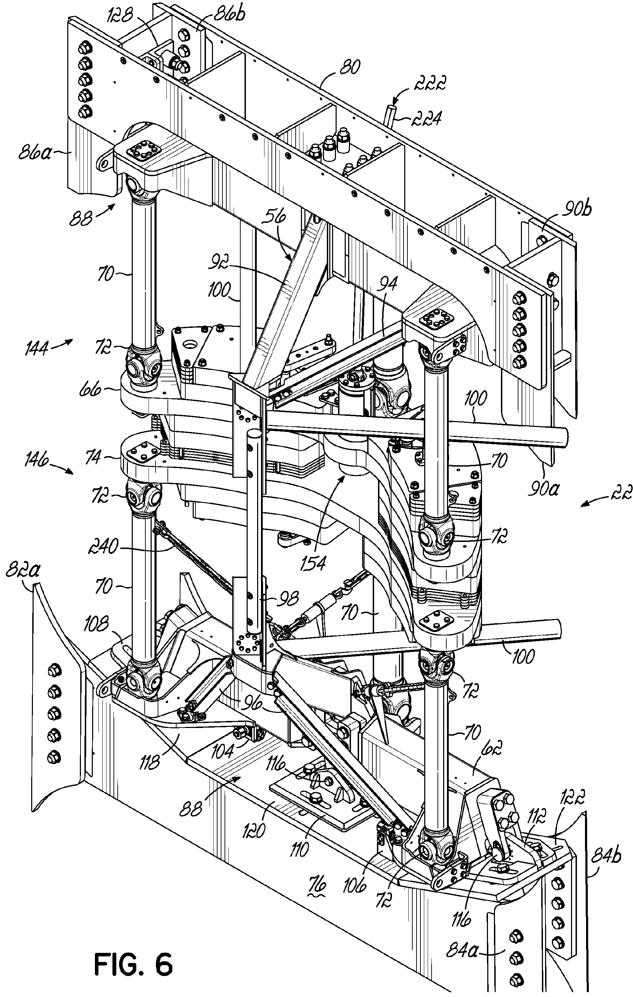

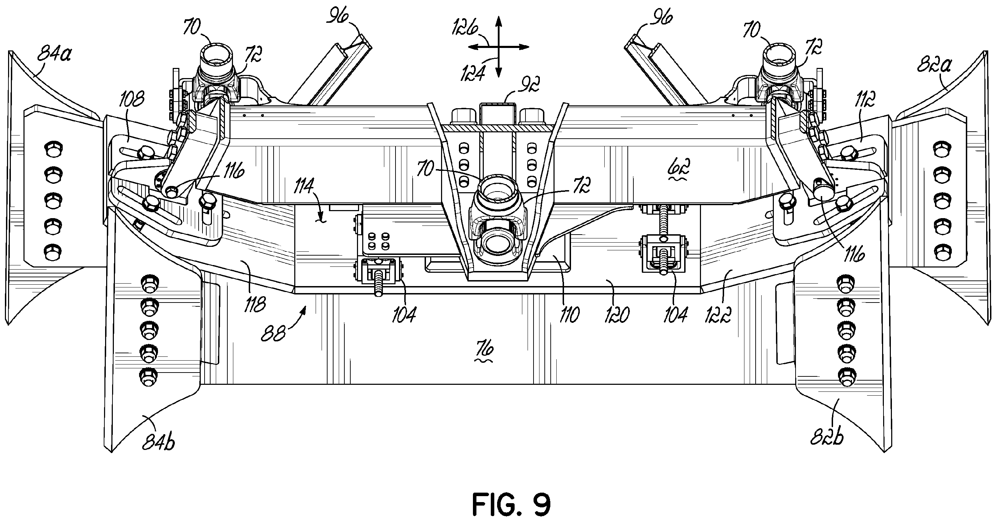

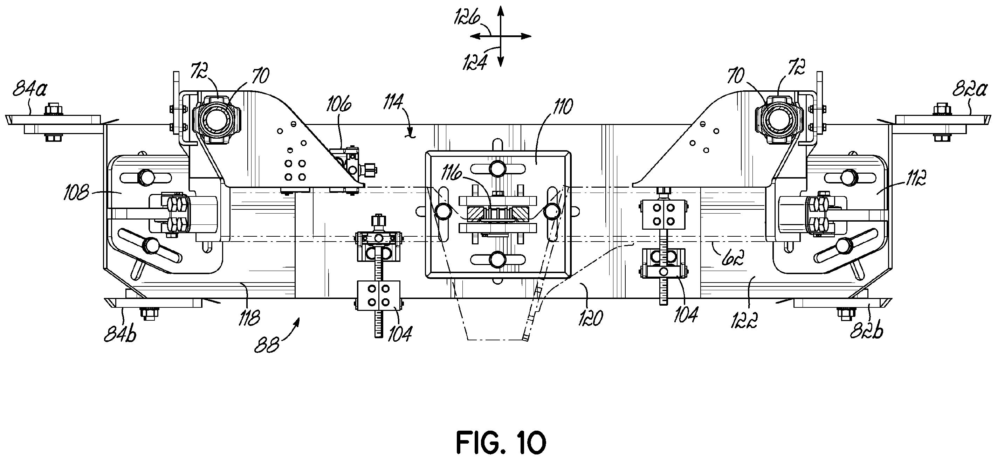

To that end and referring to Figs. 6, 7, 8, 9, 10, 11, 12A, 12B, and 12C, the tilt mechanism 88 operably couples the frame assembly 56 to the support beams 76 and 80. In the exemplary embodiment, the tilt mechanism 88 includes a radial adjustment mechanism 104 and a lateral adjustment mechanism 106. As is shown in Figs. 9-11, the mechanisms 104 and 106 are between the support beam 76 and the lower frame 62 and are coupled to both the lower frame 62 and the lower support beam 76. Exemplary mechanisms 104 and 106 include pairs of supports, one support attached to each of the frame 62 and beam 76. A threaded rod extends through both supports. Turning the rod moves the supports further apart or closer together. By way of example only, the mechanisms 104 and 106 may be a ball screw or lead screw with end supports by which rotation of the screw changes a distance between the end supports. In this way, adjusting the mechanisms 104 and 106 individually or collectively move the frame assembly 56 relative to the tower 18 and specifically with respect to the beams 76, 80.

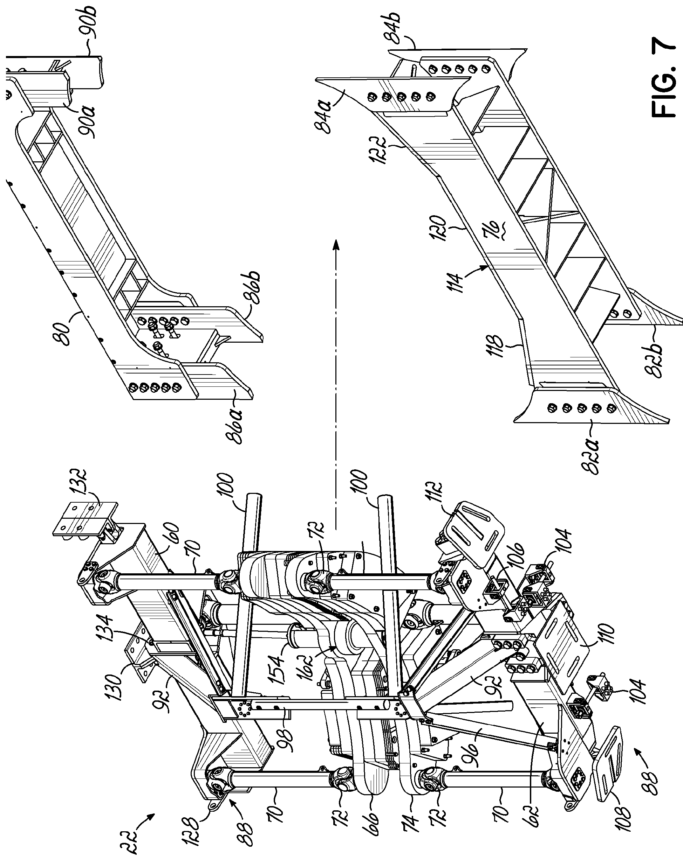

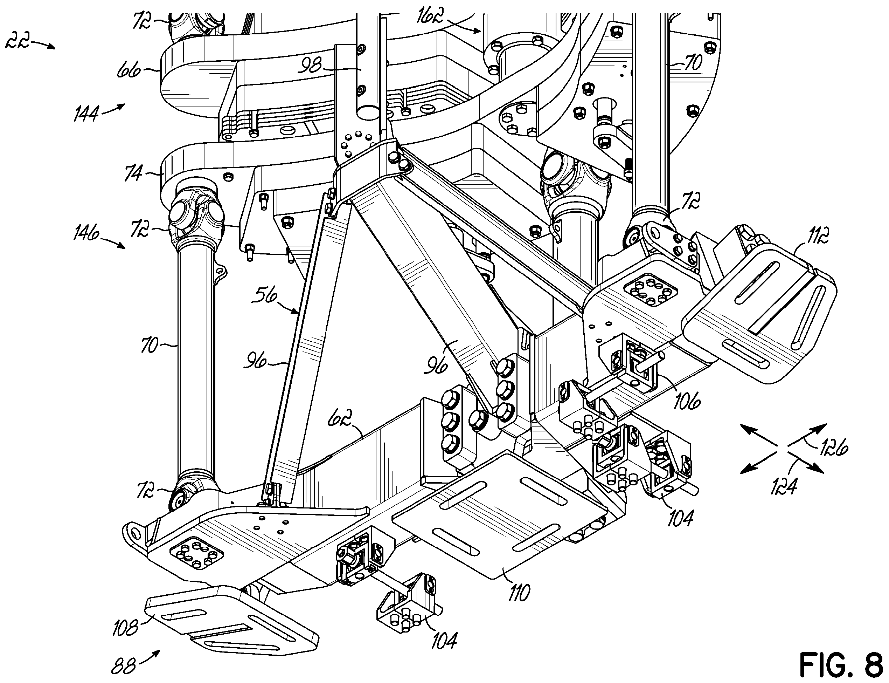

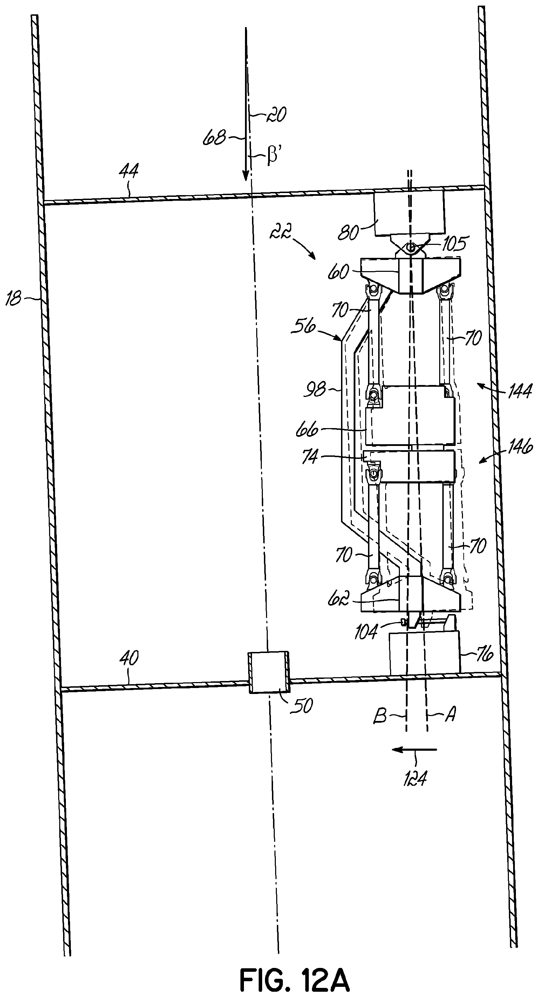

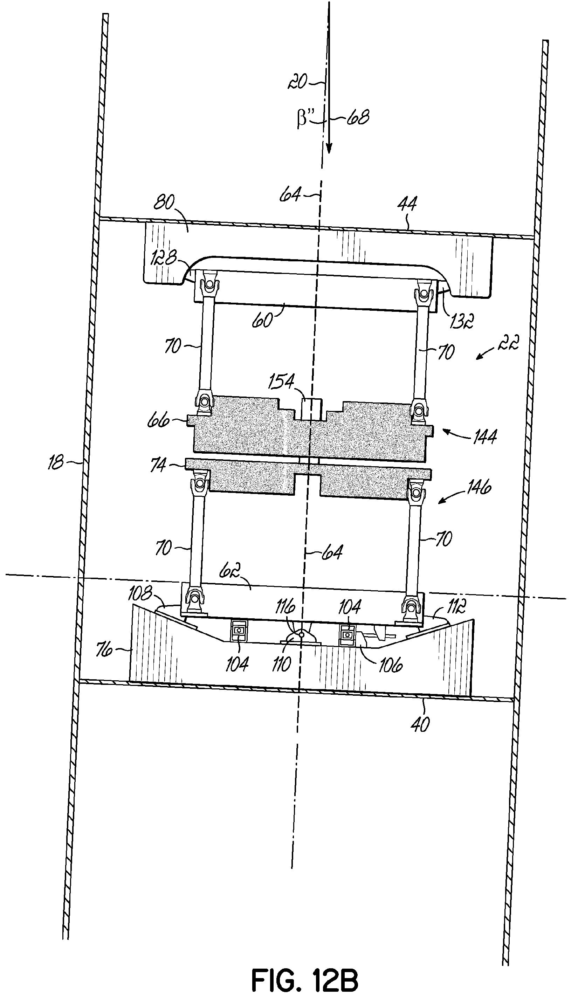

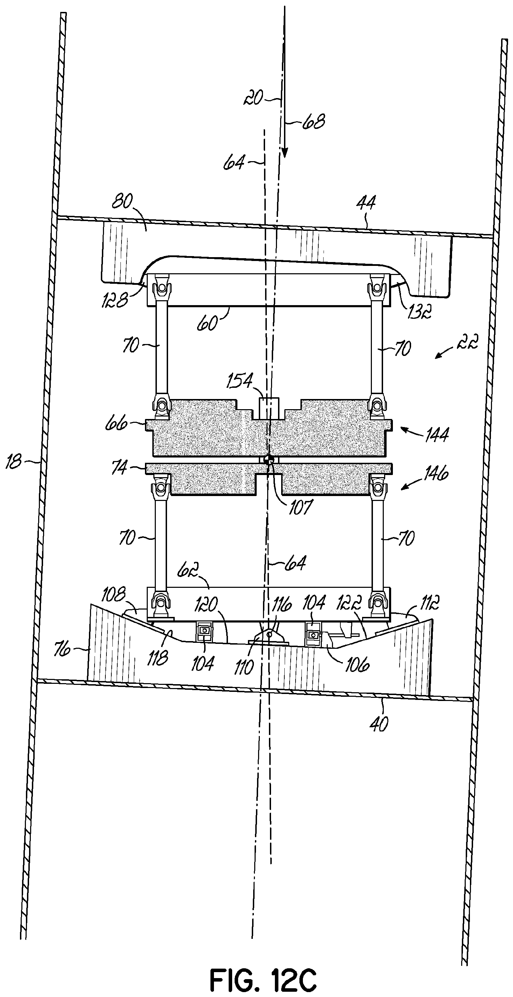

Referring to Figs. 7, 8, 9, 10, 11, and 12A, the radial adjustment mechanisms 104 are configured to move the frame assembly 56 with reference to the support beam 76 toward or away from the longitudinal axis 20 of the tower 18. In other words, operating the mechanisms 104 pushes (or pulls) the lower frame 62 on the support beam 76 away from (or towards) the longitudinal axis 20. This is illustrated by arrow 124 in Figs. 8, 9, and 10 and is further described with respect to Fig. 12A. The lateral mechanism 106 is configured to slide the frame assembly 56 in a parallel direction with the support beam 76. Operating the mechanism 106 slides the frame assembly 56 laterally in a plane generally perpendicular to a radial plane including the longitudinal axis 20 of the tower 18. This movement is illustrated by arrow 126 in Figs. 8, 9, 10, and 11 and is further described with reference to Figs. 12B and 12C.

With that general description, in the embodiment shown in Fig. 6, 7, 9, and 11, the lower frame 62 is movably coupled to the lower support beam 76 at three load bearing flanges including a left flange 108, a middle flange 110, and a right flange 112. Each flange 108, 110, and 112, is slotted and is pivotably coupled at joints 116 to the lower frame 62. Bolts couple the slotted flanges 108, 110, 112 to the beam 76. After loosening the bolts, each of the slotted flanges 108, 110, 112 is capable of limited sliding movement in directions 124 and 126 relative to the lower support beam 76 via the slots.

In the exemplary embodiment, the lower support beam 76 defines a sliding surface 114 with three slide planes 118, 120, and 122. Each of angled slide planes 118 and 122 forms an angle with the middle slide plane 120. By way of example, an obtuse angle is shown with exemplary angle between plane 118 and plane 120 and between plane 120 and plane 122 of from 140° to 165°. The angle generally depends on the dimensions of the damper 22, which may change for different towers. In that regard, by way of further example, the angle between planes 118 and 120 and 122 and 120 is in the range of greater than 0° but less than 180°. Alternatively, any two pairs of the planes 118 and 120 and/or the planes 120 and 122 may be coplanar (i.e., at 180°) or oriented at 90° relative to one another While a symmetrical planar arrangement of the slide planes 118, 120, and 122 relative to the central axis 64 is shown, other planar arrangements are possible and embodiments of the invention are not limited to the arrangement shown.

The tilt mechanism 88 may also include features at the upper frame 60. With reference to Fig. 7, slotted flanges 128 (left) and 132 (right) are pivotally coupled to the frame assembly 56 at joints 134. The left and right slotted flanges 128 and 132 are bolted to a location between the flange pairs 86a, 86b, 90a, 90b. The slotted flanges 128 and 132 pivot in the plane of the frame assembly 56, which is generally parallel to the central axis 64. A middle slotted flange 130 is pivotably coupled to the upper tripod-like member 94 and may swivel in all directions. In the exemplary embodiment, the flange 130 defines an axis of rotation 105 about which the lower frame 62 is rotatable. The middle flange 130 is bolted to the upper beam 80. The bolts on each flange 128, 130, and 132 are loosened prior to rotating the frame assembly 56 as described below with reference to Figs. 12A, 12B, and 12C.

Movement according to the mechanisms 104 and 106 is shown with reference to Figs. 12A, 12B, and 12C. The radial adjustment mechanism 104 is capable of rotating the central axis 64 clockwise or counter clockwise in a radial plane of the longitudinal axis 20. To produce rotation, operating the radial adjustment mechanisms 104 slides the lower frame 62 on flanges 108, 110, and 112 in direction 124 toward or away from the longitudinal axis 20. This sliding movement rotates the frame assembly 56 about the axis 105 defined at the upper frame 60. Movement associated with the radial adjustment mechanisms 104 is schematically illustrated in Fig. 12A.

As shown in Fig. 12A, in an orientation where the tower 18 is not vertically oriented with respect to gravity 68, the longitudinal axis 20 of the tower 18 may form an angle β' with a direction of gravity 68. In the figure, the out-of-vertical orientation of the tower 18 is exaggerated for illustration purposes. Although not shown realistically in the figure, β' may be substantially less than 2°. The central axis 64 of the vibration damper 22 may be initially parallel with the longitudinal axis 20 in the plane of Fig. 12A, as shown. The plane of Fig. 12A is a radial plane in which the longitudinal axis 20 and the central axis 64 reside. The initial position of the vibration damper 22 is shown in the shaded, dash lined outline. The axis of rotation 105 projects out of the plane of Fig. 12A and is between the frame assembly 56 and the support beam 80 at the upper frame 60. The central axis 64 is initially parallel with the longitudinal axis 20 and so forms the angle β' with the direction of gravity 68. With this initial arrangement, adjusting the radial adjustment mechanism 104 slides the lower frame 62 to the left (according to arrow 124) relative to the beam 76. This sliding movement rotates the central axis 64 labelled "A" away from alignment with the longitudinal axis 20 (a clockwise rotation is shown by way of arrow 124). Rotation permits the central axis 64 to be brought into parallel alignment with gravity 68 at "B." Although not shown in the example, a counter clockwise rotation is possible. The lateral adjustment mechanism 106 also produces rotation of the frame assembly 56.

In that regard and with reference to Figs. 12B and 12C, the lateral mechanism 106 is shown rotating the central axis 64 into alignment with gravity 68. In Fig. 12B, the central axis 64 of the vibration damper 22 may be aligned with the longitudinal axis 20 of the tower 18. The tower 18 orientation may shift over time so that both the central axis 64 and the longitudinal axis 20 are out-of-vertical, as shown. In the plane of Fig. 12B, the axes 20, 64 may form an angle β" with a direction of gravity 68. It is noted that the angles β' (Fig. 12A) and β" may not be equal and are the angular orientation of components of the direction of gravity 68 that reside in the planes of the respective figures. Again, in Figs. 12B and 12C, the out-of-vertical orientation of the tower 18 is exaggerated for illustration purposes. Although not shown realistically in the figures, β" may be substantially less than 2°.

With this initial arrangement, adjusting the lateral adjustment mechanism 106 slides the lower frame 62 to the right (according to arrow 126 in Fig. 12C) relative to the beam 76. This sliding movement rotates the central axis 64 away from alignment with the longitudinal axis 20 (a counter clockwise rotation is shown by way of arrow 126). Rotation permits the central axis 64 to be brought into parallel alignment with gravity 68, as is shown in Fig. 12C. Although not shown in the example, a clockwise rotation is possible.

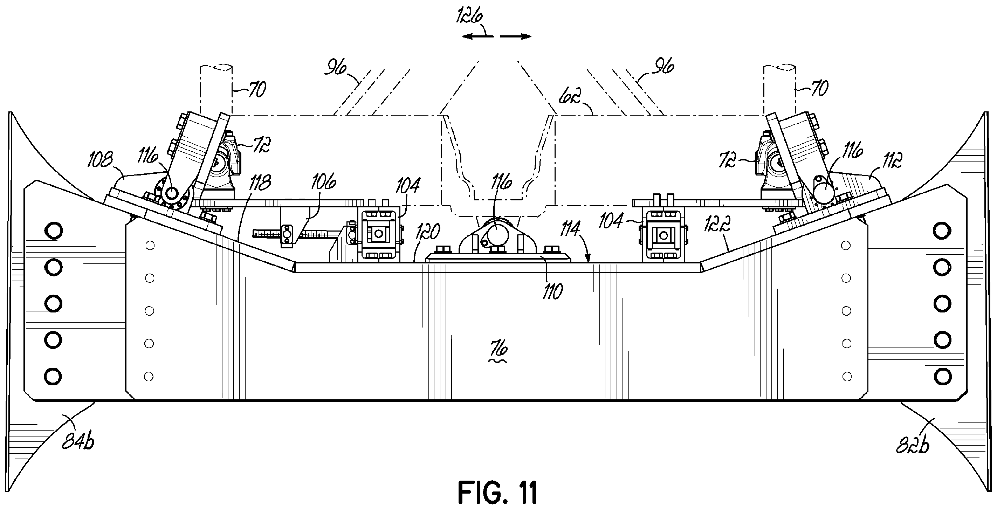

In Fig. 12C, rotation of the central axis 64 is about an axis 107, which is generally perpendicular to the longitudinal axis 20. In combination with adjustments of the lateral mechanism 106, the relative orientation of the slide planes 118, 120, and 122 and slotted flanges 110, 112 produces rotation of the frame assembly 56. By way of example only, and with reference to Figs. 11 and 12C, operating the mechanism 106 to move the lower frame 62 to the right (shown by arrow 126) slides the left slotted flange 108 to lower location on the left-angled plane 118 while simultaneously sliding the right slotted flange 112 to a higher position on the right-angled plane 122. The middle flange 110 slides along the middle plane 120. This sliding motion as directed by the planes 118, 120, and 122 relative to flanges 108, 110, and 112, respectively, elevates the lower frame 62 on the right side (at flange 112) and lowers the frame 62 on the left side (at flange 108) relative to the support beam 76. In this way, the frame assembly 56 rotates about axis 107 (Fig. 12C). In the example, the central axis 64 is rotated counter clockwise toward the orientation of gravity 68. After rotation, the central axis 64 may be aligned with gravity 68. By way of example and not limitation, the range of rotation/tilting is ± 2° for both the radial adjustment mechanism 104 and lateral adjustment mechanism 106.

At the upper frame 60, adjustment of the lateral mechanism 106 causes the upper frame 60 to move in accordance with movement of the lower frame 62. For example, if the lower frame 62 is tilted upward on the right (e.g., counter clockwise rotation shown in Fig. 12C), the upper frame 60 also tilts upward on the right. This is shown by way of example by comparison of Fig. 12B with Fig. 12C. This rotation may result in some relative sliding movement between the left and right slotted flanges 128 and 130 and the support beam 80 at the upper frame 60. The middle flange 130 swivels to permit rotational motion of the upper frame 60 in the plane of Fig. 12C.

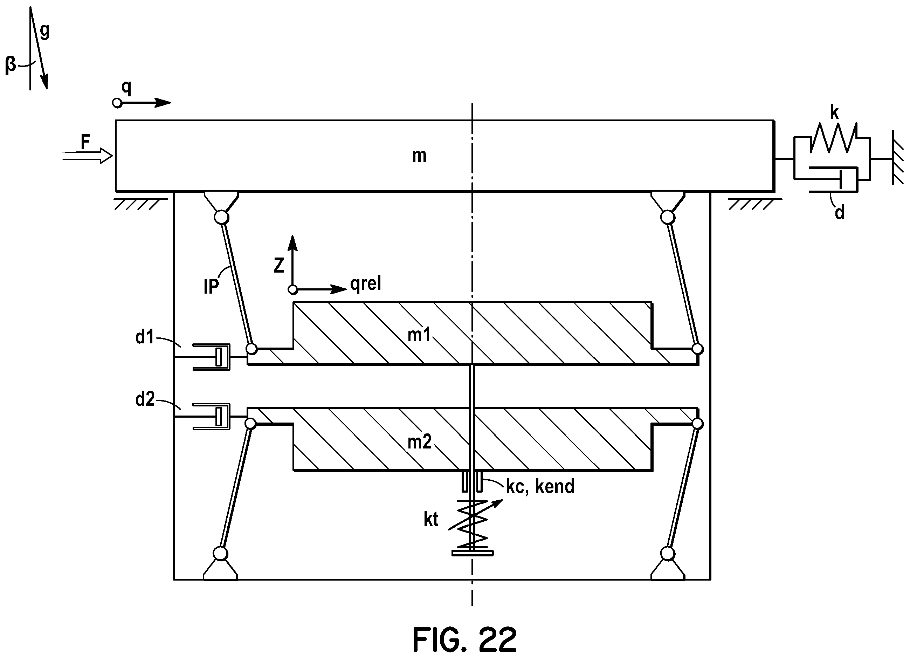

As can be appreciated, a process for aligning the central axis 64 with the direction of gravity 68 may require iteration between adjustments of the radial adjustment mechanisms 104 and the lateral mechanism 106 to address angles β' and β", which may be components of angle β (see Fig. 22).

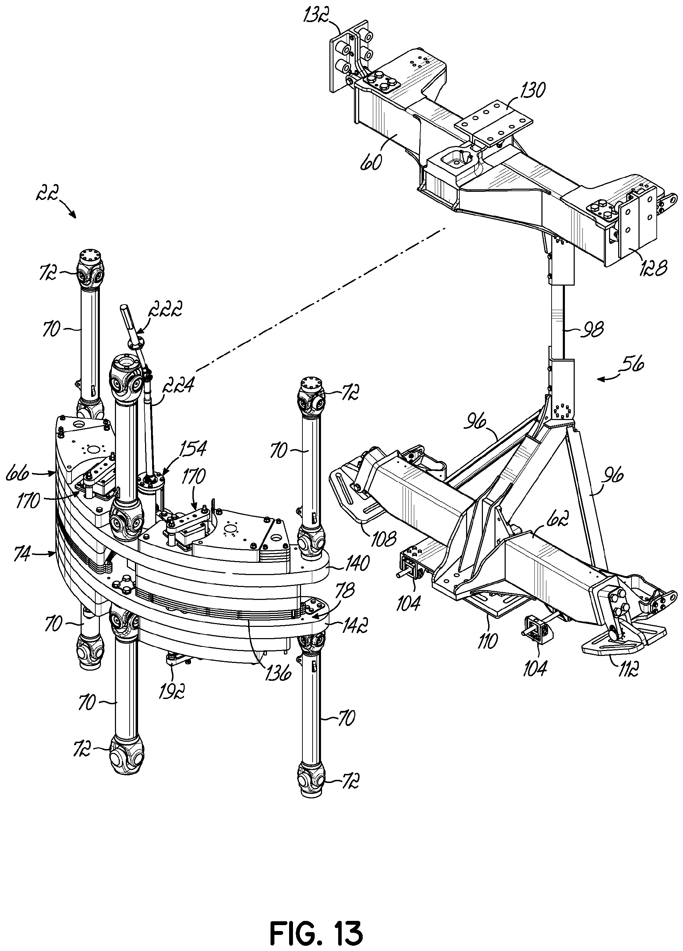

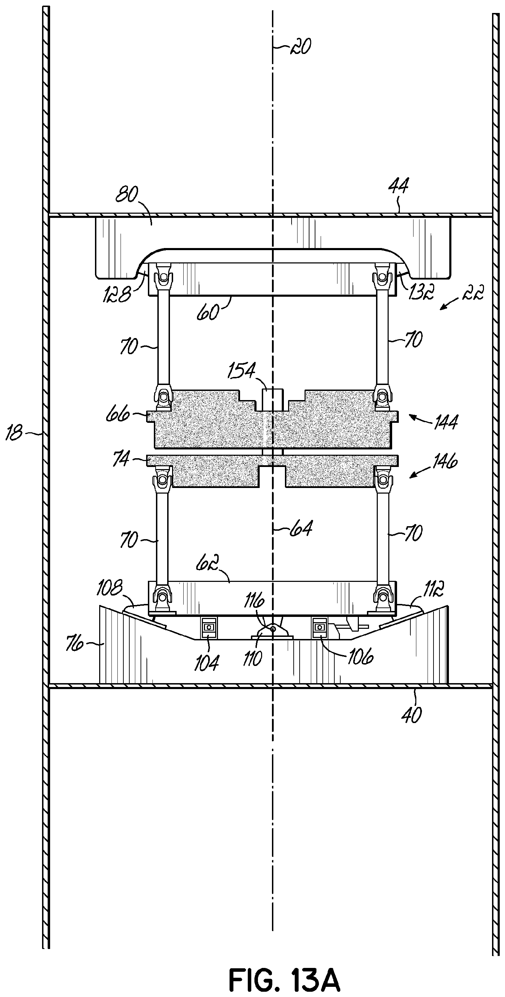

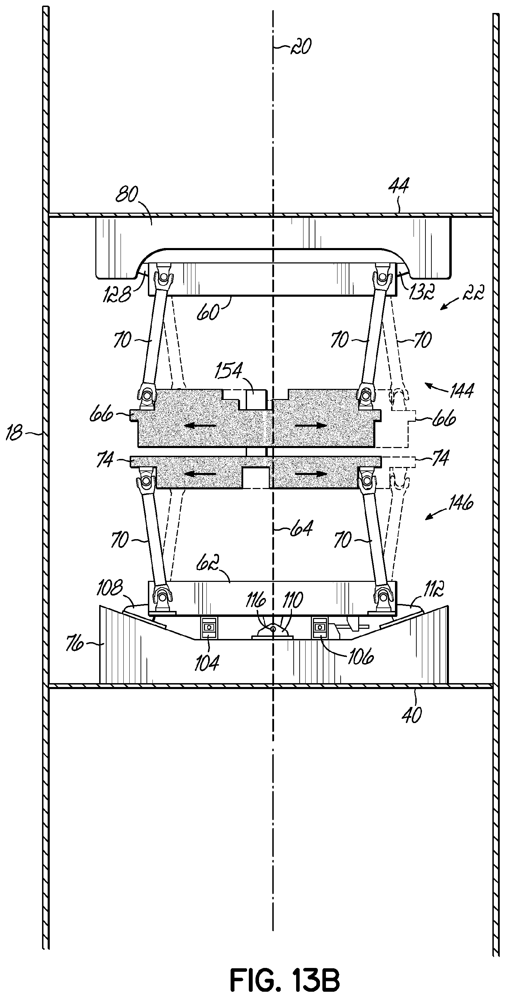

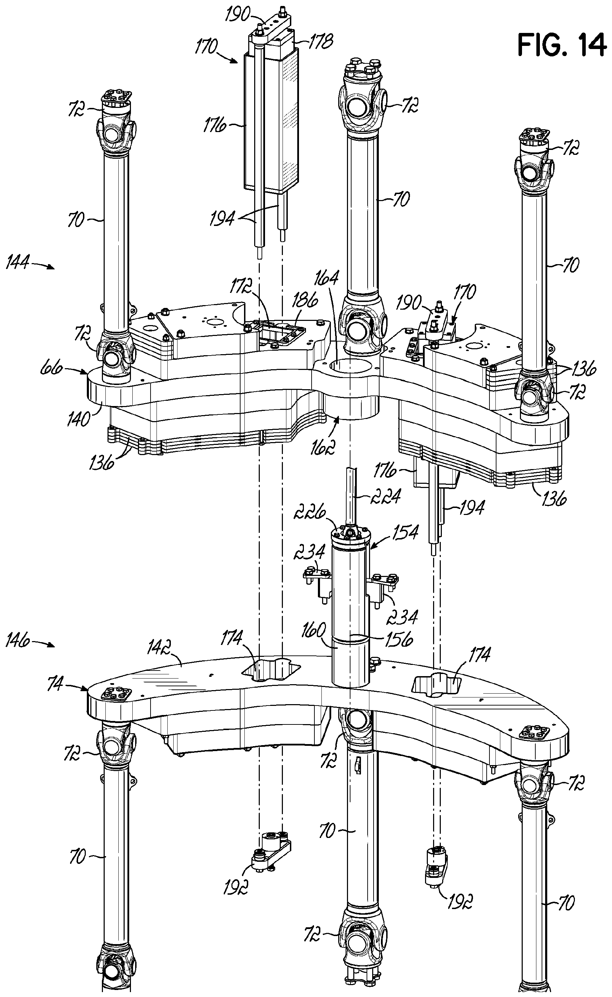

With reference now to Figs. 13 and 14, in the exemplary embodiment, each of the upper and lower masses 66, 74 is assembled from multiple plates 136. The plates 136 include a main upper plate 140 for the upper mass 66 and a main lower plate 142 for the lower mass 74. Additional individual plates 136 may then be coupled to the main upper plate 140 and/or main lower plate 142. The masses 66 and 74 may therefore be tuned to the frequencies needed for damping of the wind turbine 10. In that regard, individual plates 136 are selected and attached to the main plate 140, 142 to bring the total mass into a predetermined range for the wind turbine 10. As shown, the individual plates 136 may vary in thickness and/or in outer dimensions but may be stacked on and coupled to the main upper plate 140 or to the main lower plate 142. The individual plates 136 determine a location of the centroid 66a of the upper mass 66 and the centroid 74a of the lower mass 74 (shown in Fig. 5). Thus, it is also possible to modify the location of the centroids 66a, 74a of the masses 66, 74.

Further, the masses 66 and 74 at their equilibrium positions define a center of gravity 150 (Fig. 5) of the vibration damper 22. As shown in Fig. 5, since in the exemplary embodiment, the upper mass 66 is larger and heavier, the center of gravity 150 is shown in the upper mass 66. The center of gravity 150 can be moved by adding/removing the plates 136 and/or changing their location. The center of gravity 150 may be on the central axis 64.

The individual plates 136 may each have a shape and/or dimension that contribute to the bean shape of the upper mass 66 or the lower mass 74. In the exemplary embodiment, the plates 136 define the bean shape of the upper and lower masses 66, 74 described above. While the masses 66 and 74 are shown as an assembly of individual plates 136, embodiments on the invention are not limited to an assembly of masses forming a bob portion of a pendulum. Specifically, either one or both the masses 66 and 74 may be monolithic bodies. By way of example and not limitation, total mass of masses 66 and 74 may be less than 39 metric tons, less than 28 metric tons, or less than 14 metric tons when the vibration damper 22 is positioned with its center of gravity 150 within 20 m of the flange 38 (shown in Fig. 2). By way of further example, the upper mass 66 may be from 8,000 kg to 15,000 kg and lower mass 74 may be from 4,000 kg to 9,000 kg.

As described above, and with continued reference to Figs. 13 and 14, each of the upper mass 66 and the lower mass 74 are movably coupled to the frame assembly 56 with pendulum rods 70 and cardan joints 72. The upper mass 66 and corresponding rods 70 and joints 72 form a suspended pendulum 144, and the lower mass 74 and corresponding rods 70 and joints 72 form an upstanding pendulum 146. Pendulums 144, 146 are labelled in Fig. 6.

The pendulums 144, 146 each swing along an arcuate path defined by rods 70 and joints 72. In the exemplary embodiment, while these pathways are spaced apart and separate, the pendulums 144, 146 are coupled together so that the motion of both pendulums 144 and 146 is synchronized in side-to-side motion. That is, the pendulums 144, 146 each follow their independent arc pathways, but their relative horizontal position from equilibrium is the same. Their relative vertical positions, however, change. So, during oscillation, the upper mass 66 and lower mass 74 of the pendulums 144 and 146, respectively, trace pathways in which their horizontal positions from equilibrium are the same but their separation in the vertical direction increases. The vertical component of the arc traced by upper mass 66 is positive in the sense that the upper mass 66 swings in an upward direction as it is displaced horizontally from equilibrium. The lower mass 74 traces an equal but negative vertical position in that it swings in a downward direction as it is displaced along the same horizontal path as the upper mass 66 from equilibrium. By the pendulum 144 swinging upward and the upstanding pendulum 146 swinging downward, the separation of the masses 66, 74 increases with horizontal displacement. This is shown schematically by comparison of Fig. 13A with Fig. 13B.

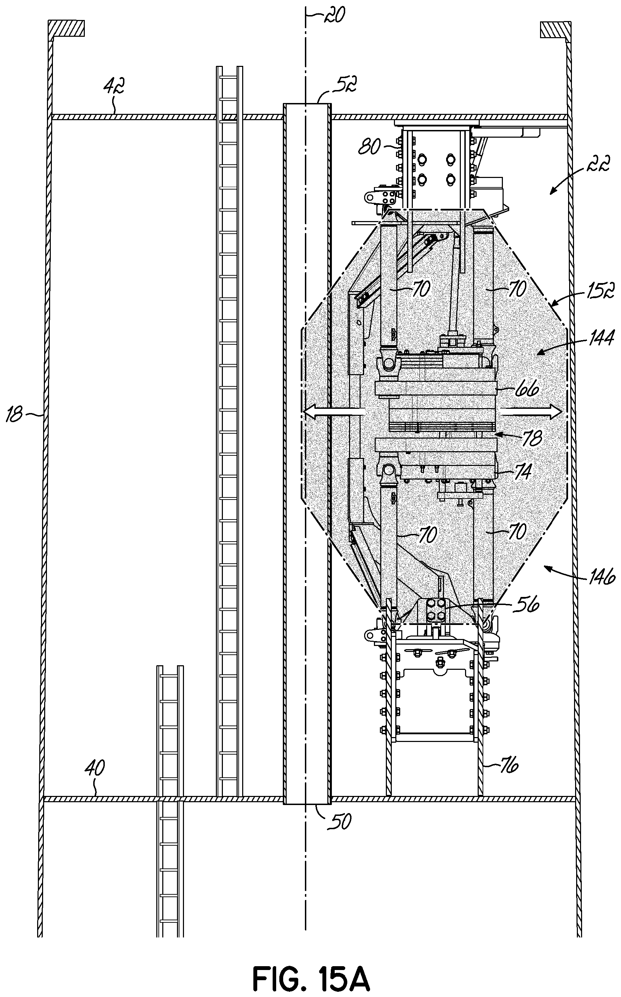

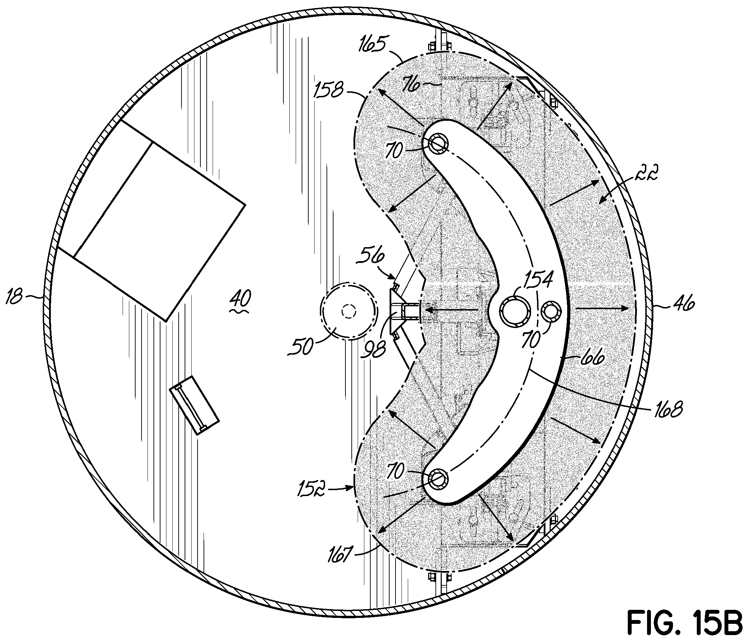

With the coordinated arc pathways of pendulums 144, 146, the gap between the masses 66 and 74 expands from the smallest distance between masses 66, 74 at equilibrium (i.e., gap 78) to a maximum when the masses 66, 74 are at a maximum horizontal displacement from equilibrium. With the maximum displacements vertically and horizontally, during oscillation, the pendulums 144, 146 trace the volume shown in Figs. 15A. When viewed along a plane taken through the maximum horizontal displacement, the masses 66 and/or 74 trace an arcuate annular perimeter 158 shown in Fig. 15B. This is a volume of activity 152 as determined by the displacement of the pendulums 144, 146 in all directions and may correspond to a maximum damping capability of the vibration damper 22 on the tower 18. In the embodiment shown, the volume of activity 152 has a partial toroidal configuration which generally fills the annular space between the longitudinal axis 20 and the outer wall 46. The volume of activity 152 does not intersect the longitudinal axis 20 and so the vibration damper 22 does not enter the space between the openings 50, 52 (Fig. 2). This is shown in Fig. 15B. The maximum displacement indicated by the perimeter 158 is between the tower wall 46 and the longitudinal axis 20 and, more particularly, between the tower wall 46 and the opening 50. The annular arcuate perimeter 158 includes an arc 168 along a radial midline of the perimeter. The midline is half the distance between an outer arc and an inner arc of the perimeter 158 and extends from radiused end 165 to radiused end 167. The arc 168 has a radius that may be equal to or less than one-half the radius of the tower wall 46 at a height of the annular arcuate perimeter 158. The annular arcuate perimeter has an arc measure of less than 180°.

To that end, and referring to Fig. 14, the pendulums 144 and 146 are coupled together to permit vertical separation of the masses 66, 74 in the direction of the central axis 64 but to minimize or eliminate variation in relative horizontal movement between the masses 66, 74 during their oscillation. In the exemplary embodiment, the pendulums 144 and 146 are coupled together in three locations though embodiments are not limited to three locations. More or fewer connections between the pendulums 144 and 146 are contemplated.

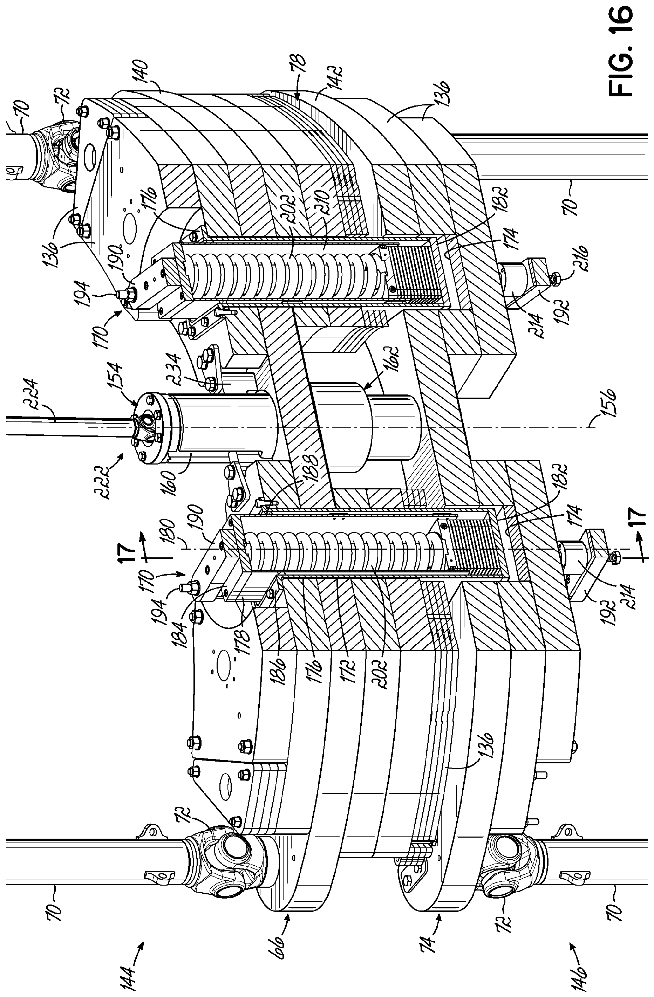

As shown in Figs. 14 and 16, a coupling mechanism 154 provides a sliding, vertically-oriented connection between the pendulum 144 and the inverted pendulum 146. In particular, the coupling mechanism 154 movably connects the upper mass 66 to the lower mass 74 and defines a vertical motion axis 156 by which the gap 78 can increase and decrease but by which relative side-to-side displacement of the masses 66 and 74 is prohibited. In the exemplary embodiment, the vertical motion axis 156 and the central axis 64 are coincident with the center of gravity 150 residing on the vertical motion axis 156 while the masses 66, 74 are at equilibrium. The coupling mechanism 154 prevents, for example, the pendulum 144 from swinging in one direction and, at the same time, the inverted pendulum 146 from swinging in the opposing direction.

In the embodiment shown, the coupling mechanism 154 includes a guide beam 160 secured to the lower mass 74 on the main plate 142. On the upper mass 66, a guide assembly 162 hangs from the upper main plate 140. The guide assembly 162 may include a depending tube that defines an opening at one end thereof configured to receive the guide beam 160 in, for example, a telescoping manner. The tube may include one or more low-friction contact pads along an inner surface of the tube to define the opening. The contact pads facilitate movement of the guide beam 160 and the guide assembly 162 relative to each other. A through-bore 164 (Fig. 14) in the upper main plate 142 together with the opening in guide assembly 162 receive the guide beam 160 in the direction of the central axis 64. With the guide assembly 162 engaged with the guide beam 160, movement of the upper mass 66 relative to the lower mass 74 is restricted to movement along the vertical motion axis 156. That is, the masses 66 and 74 can separate and approach one another vertically along axis 156 but cannot shift side-to-side (i.e., perpendicular to the axis 156) relative to one another. With this configuration, during oscillation, the masses 66 and 74 are restrained to the same side-to-side location but can separate from one another along the vertical motion axis 156.

In the exemplary embodiment, the pendulums 144, 146 interact at two additional locations spaced apart from the coupling mechanism 154. In Figs. 14, 16, and 17, a pair of end stops 170 extend between the pendulum 144 and the inverted pendulum 146. The stops 170 are coupled to the pendulum 144 or the pendulum 146. In the exemplary embodiment, the stops 170 are coupled to the pendulum 144. Each end stop 170 is configured to limit maximum displacement of the pendulums 144 and 146 and so may define at least in part the volume of activity 152 (see Fig. 15A) in the exemplary embodiment.

To do so, the end stops 170 limit vertical separation between the upper mass 66 and lower mass 74 along the vertical motion axis 156. That is, the end stops 170 determine a predetermined maximum gap between the masses 66, 74 during oscillation of the pendulums 144 and 146. The predetermined maximum gap is greater than the gap 78 when the pendulums 144 and 146 are at their equilibrium positions. However, the predetermined maximum gap may be less than a vertical separation distance along the axis 156 between the upper mass 66 and the lower mass 74 if the pendulums 144 and 146 are unrestrained (e.g., lack the end stops 170) and so are permitted to swing to a maximum amplitude permitted by the rods 70 and joints 72. At the predetermined maximum gap, the end stops 170 prevent further motion of the masses 66, 74 away from one another along the vertical motion axis 156. As a consequence of the limitation in motion in the vertical motion axis 156, the end stops 170 also limit the side-to-side displacement of the masses 66, 74 from equilibrium. The end stops 170 may prevent the masses 66 and 74 from reaching their maximum amplitude defined by greatest arc traceable by the rods 70 and joints 72.

In addition to limiting maximum vertical separation between the upper mass 66 and the lower mass 74, the end stop 170 also reduces the velocity of the masses 66 and 74 during oscillation. As the pendulums 144 and 146 oscillate, the masses 66 and 74 move horizontally and vertically along their respective arcs. Along these arcs, the end stops 170 are engaged to slow the rate of vertical separation of the masses 66, 74 as the predetermined maximum gap is approached. And, at the predetermined maximum gap, the end stops 170 soften impact of the masses 66, 74. In each aspect, the end stops 170 absorb and dissipate kinetic energy of the masses 66, 74 along at least portion of their arc pathways. Advantageously, this reduces mechanical fatigue on the vibration damper 22 and on the tower 18.

With reference to Figs. 14, 16, and 17, in the exemplary embodiment, the end stops 170 are carried by the upper mass 66. As shown in Fig. 14, the end stops 170 are received in through-bores 172 in the plates 136 of the upper mass 66 and in blind bores 174 in one or more plates 136 in the lower mass 74. The end stops 170 are tubular bodies in which a housing 176 slidably receives a guide sleeve 178 along a stop axis 180. The housing 176 and guide sleeve 178 slide relative to one another in an interlocking-like manner along axis 180 when the end stop 170 is activated during oscillation of the pendulums 144 and 146. Axis 180 is generally parallel to the vertical motion axis 156 of the masses 66, 74. Along the axis 180, an endcap 182 on the housing 176 opposes an endcap 184 of the guide sleeve 178. The endcaps 182, 184; housing 176; and guide sleeve 178 define an operating volume of the end stop 170. The distance between endcaps 182 and 184, and therefore the operating volume of the end stop 170, changes when the end stop 170 is activated during oscillation.

In that regard, the housing 176 is secured to the upper mass 66 at flange 186 on a top surface of the upper mass 66 near a seal 188 between the housing 176 and the guide sleeve 178. As shown, the endcap 182 of the housing 176 resides in the blind bore 174 in the lower mass 74. The endcap 182 may not contact the lower mass 74 in the blind bore 174. The endcap 184 of the guide sleeve 178 is coupled by a yoke or cross bar 190 to an opposing yoke or cross bar 192 by a pair of tie rods 194. As shown, the tie rods 194 extend through each of the masses 66 and 74 with the opposing cross bar 192 being positioned proximate a lower surface of the lower mass 74. The lower mass 74 moves relative to the opposing cross bar 192 so that the lower surface of the lower mass 74 may contact the cross bar 192 during oscillation. Contact at the cross bar 192 activates the end stop 170. This occurs when the upper mass 66 and lower mass 74 vertically separate. When activated, the end caps 182 and 184 move toward one another along axis 180 and the operating volume is reduced.

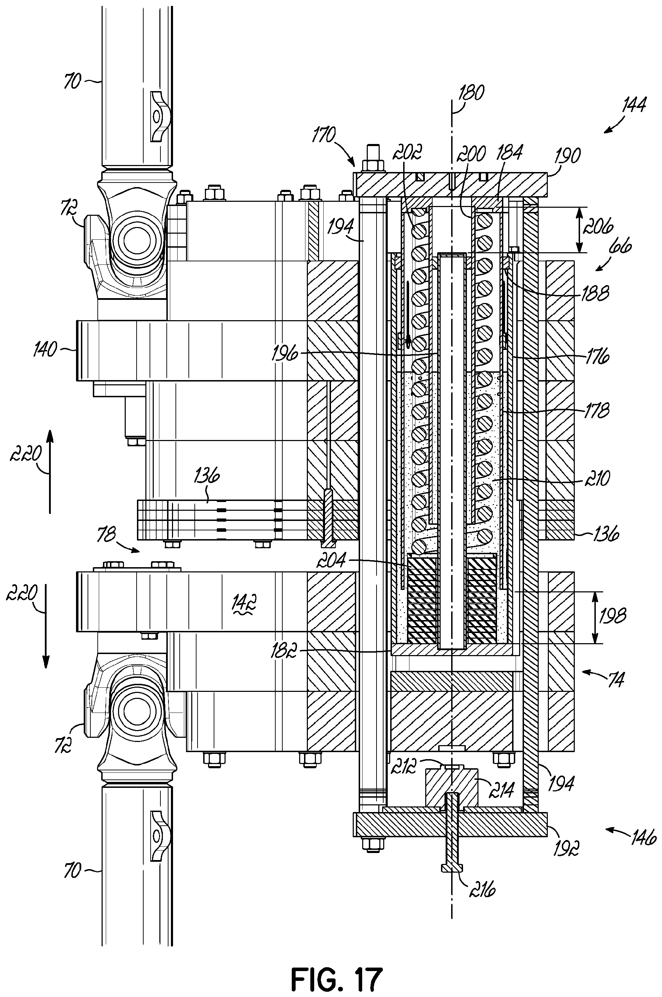

With reference to Figs. 16 and 17, within the operating volume, specifically within the housing 176, there is a gap 198 between the guide sleeve 178 and the endcap 182. The gap 198 narrows when the end stop 170 is engaged during oscillation of the pendulums 144 and 146. The exemplary end stop 170 houses a piston 196 that extends from the endcap 182 and which is partly received in a piston sleeve 200 that extends from opposing endcap 184. There is a gap 206 between an end of the piston 196 and the endcap 184. Similar to gap 198, the gap 206 narrows when the end stop 170 is engaged during oscillation. A coil spring 202 is housed between the piston 196 and the piston sleeve 200 and may be attached to the endcap 184. A bumper 204 surrounds piston 196 at endcap 182 and is positioned to engage spring 202. The bumper 204 may be a layered stack of an elastomeric material, such as rubber. As shown, the spring 202 and bumper 204 collectively extend a full height of the operating volume from endcap 182 to endcap 184. In a nonactivated condition, as shown, neither the spring 202 nor the bumper 204 are compressed. A damping fluid 210 fills a portion of the operating volume. The fluid 210 is generally a highly viscous fluid.

During oscillation of the pendulums 144 and 146, as the masses 66 and 74 move along their arc pathways, the vertical separation between them increases. The vertical separation is along vertical motion axis 156 in accordance with the coupling mechanism 154. Initial separation of the masses 66 and 74 from the equilibrium position may not activate the end stop 170. That is, there may be a portion of pendulum motion that does not contact the end stop 170. The end stop 170 shown in Fig. 17 is not mechanically engaged and in particular, the lower mass 74 is not in contact with the cross bar 192.

Once the vertical separation reaches a predetermined distance, the lower mass 74 contacts the cross bar 192 at 212. In the embodiment shown in Fig. 17, the mass 74 contacts the cross bar 192 at a spacer 214. It is noted that a distance between the spacer 214 and the lower surface of the mass 74 is adjustable with screw 216. Decreasing the distance between the spacer 214 and the lower mass 74 causes the end stop 170 to be activated sooner in the oscillation of the pendulums 144 and 146 (i.e., at smaller side-to-side displacements of the masses 66 and 74 and at smaller deviations from the gap 78 at equilibrium). Adjustments may include activating the end stop 170 at equilibrium. Therefore, a full range of adjustments may be from nonactive at equilibrium to active at equilibrium (i.e., coil spring always at least partly compressed). Further, the spacer 214 may be removed during operation in the tower 18 though it may be utilized to tune the vibration damper 22 to use with a tower section while it is quayside or on a ship.

Adjustment of the end stop 170 is advantageous in that vibration damper 22 may be tuned to the structure on which it is installed and/or to the surrounding vibration environment. For example, when the vibration damper 22 is installed in a tower section, such as section 18c (Fig. 1), before it is assembled with other sections 18a, 18b, the vibration damper 22 may be tuned to absorb vibration of just the section 18c. Such vibrations may be significantly different that the vibrations of the tower 18. Before installation of the section 18c, the section 18c may sit quayside. In that environment, the end stop 170 may be tuned to dampen vibrations of the tower section 18c while it is quayside. Once the section 18c is loaded onto a ship, the end stop 170 may again be adjusted to dampen vibrations of the tower section 18c on the ship. Thus, it is possible to tune the end stop 170 to a particular frequency response desired for structure and/or location at each stage from manufacture of a tower section to installation of the tower section, for example, at an offshore location and then during operation of the wind turbine.

During oscillation, after the lower mass 74 contacts the spacer 214, the end stop 170 is activated. With further separation of the masses 66 and 74, that is, when the vertical separation between the upper mass 66 and the lower mass 74 increases in the direction of arrows 220 in Fig. 17, the housing 176 and guide sleeve 178 slide relative to one another and each of the gaps 198 and 206 decrease. The coil spring 202 is compressed as the distance between the endcaps 182 and 184 decreases. In this way, the force of the coil spring 202 resists further separation of the masses 66, 74. The fluid 210 also resists further separation as the endcaps 182 and 184 approach one another and the operating volume is reduced.

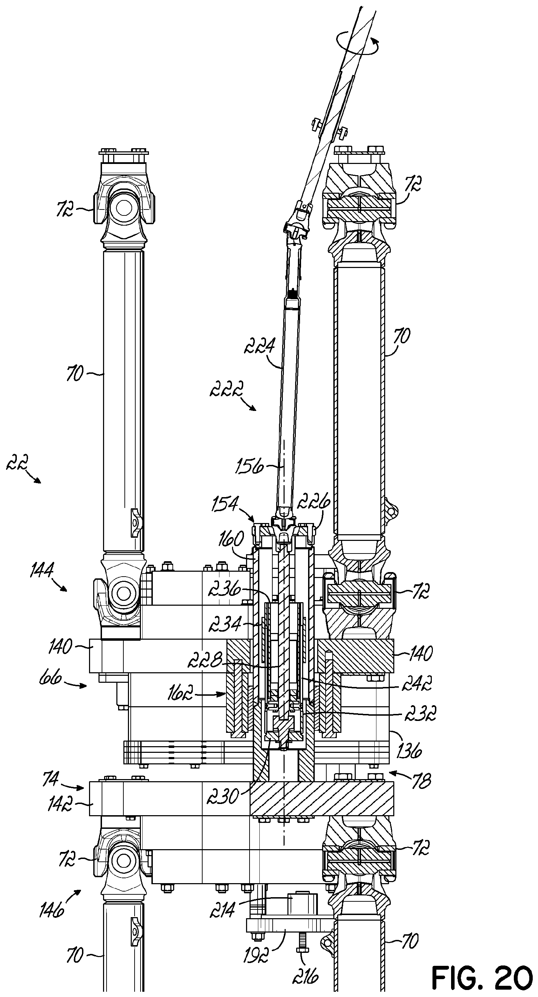

With additional separation of the masses 66 and 74 along the vertical motion axis 156, the coil spring 202 may become fully compressed along axis 180 and the bumper 204 is engaged. In this configuration, the fully compressed coil spring 202 and bumper 204 mechanically couple each of the endcap 182 and 184 forming a column of material that is more rigid than the uncompressed coil spring 202. The column of bumper 204 and fully compressed spring 202 is only elastically compressible as determined by the bumper 204. This limits further vertical separation of the masses 66, 74 with the only remaining mechanical give in the end stop 170 being the elasticity of the bumper 204. The bumper 204 is configured to absorb kinetic energy to bring the masses 66 and 74 to a stop as they reach the predetermine maximum gap permitted the end stop 170. Fig. 20 depicts performance of a vibration damper 22 with an exemplary end stop according to embodiments of the invention. From the graphs, the exemplary embodiment of the end stop is believed to have improved damping at greater acceleration of the tower. For example, at "a_th" of the "DAMPER WITH END STOP," the end stop is activated with the spring being compressed and damper fluid being displaced. By way of comparison of the "DAMPER WITH END STOP" graph to the "DAMPER WITHOUT END STOP", it is noted that the former provides a greater level of damping at nearly all levels of acceleration of the tower than the later. Higher damping at all levels indicates improved damping performance.

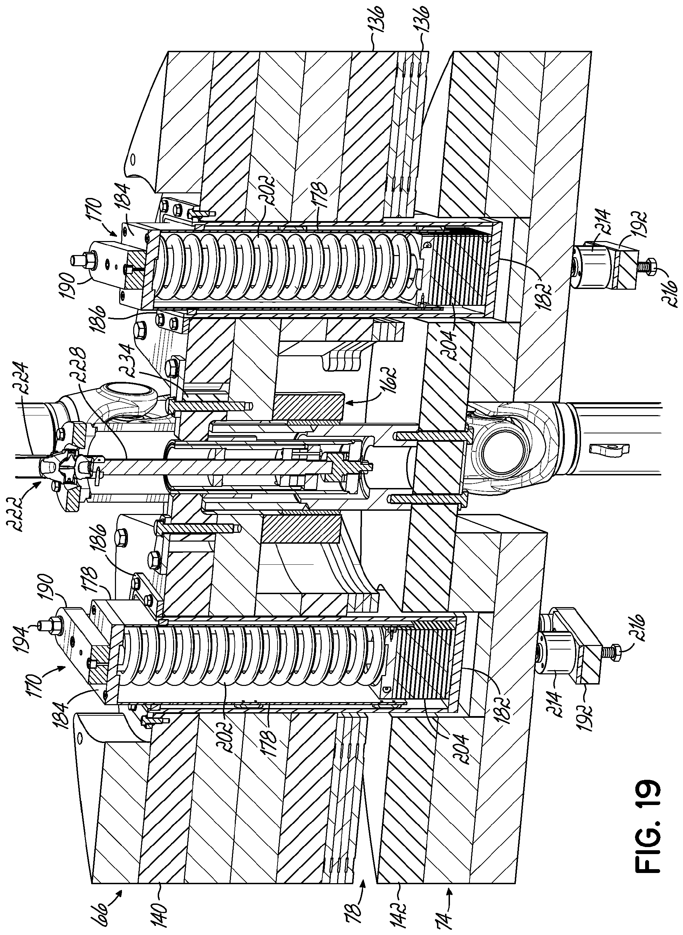

According to one aspect of the invention, as with any complex machine, there will be times when maintenance and/or repair will be required. For safety purposes, the vibration damper 22 must be stationary or nearly stationary despite ongoing tower vibrations during maintenance and/or repair of the vibration damper 22 or of other equipment in proximity to the damper 22. To that end, with reference now to Figs. 2, 19, 20, 21A, and 21B, in the exemplary embodiment, a locking mechanism 222 is operable to restrict or inhibit oscillation of the vibration damper 22. Generally, the locking mechanism 222 is movable relative to the masses 66, 74 in a direction parallel to the vertical motion axis 156 between an unlocked position for normal operation of the vibration damper 22 and a locked position for maintenance/repair. In the locked position, the locking mechanism 222 limits or prohibits separation of the masses 66 and 74 in the vertical direction. By limiting/prohibiting vertical separation, the locking mechanism 222 also reduces or inhibits side-to-side oscillations of the pendulums 144, 146.

In the exemplary embodiment, an actuation rod 224 extends from a location outside of the volume of activity 152 (Figs. 15A and 15B), such as from the platform 44 on the level above the vibration damper 22. Service personnel may reach through an access hatch (not shown) in platform 44 to activate the locking mechanism 222 by rotating the rod 224 while the pendulums 144 and 146 are oscillating. The rod 224 is rotatably coupled through cap 226 to a threaded shaft 228 housed in the guide beam 160 of the coupling mechanism 154.

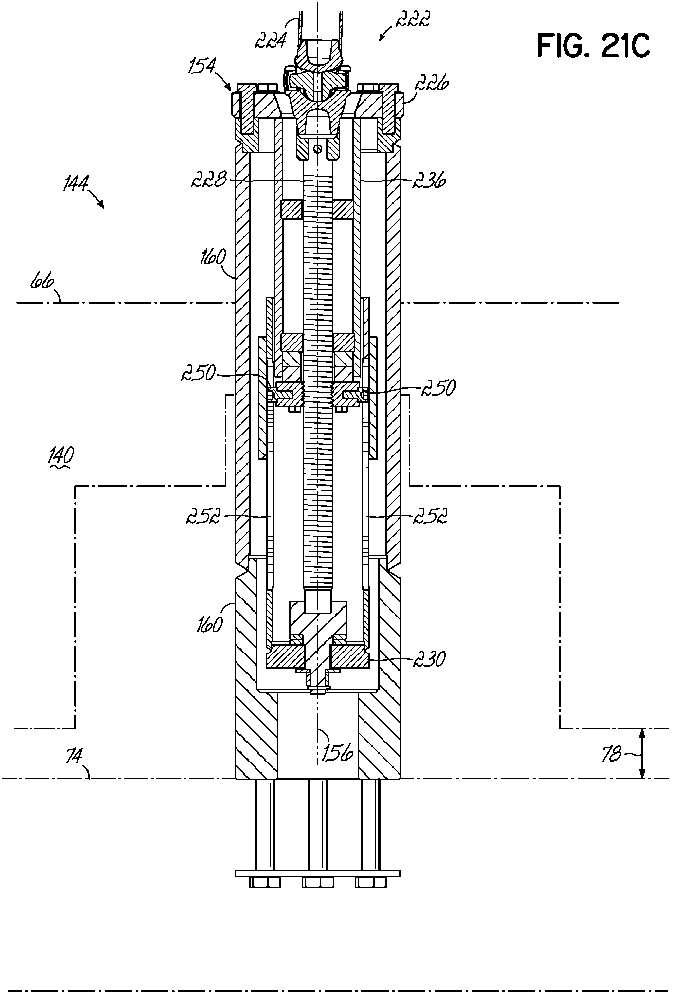

As is shown and described above with reference to Figs. 14, 20, and 21A, the guide beam 160 (and cap 226) is secured to the main lower plate 142 of the lower mass 74. The threaded shaft 228 is held in a fixed, rotatable position with respect to the guide beam 160 by cap 230 at a lower end of a guide tube 232. The guide tube 232 is secured to the upper mass 66 by bracket 234. The guide tube 232 slidably receives a stop element 236 on the threaded shaft 228. In Fig. 21C, in one embodiment, the stop element 236 has a tubular body with opposing guide pins 250 extending outwardly to be received in corresponding slots 252 of guide tube 232.

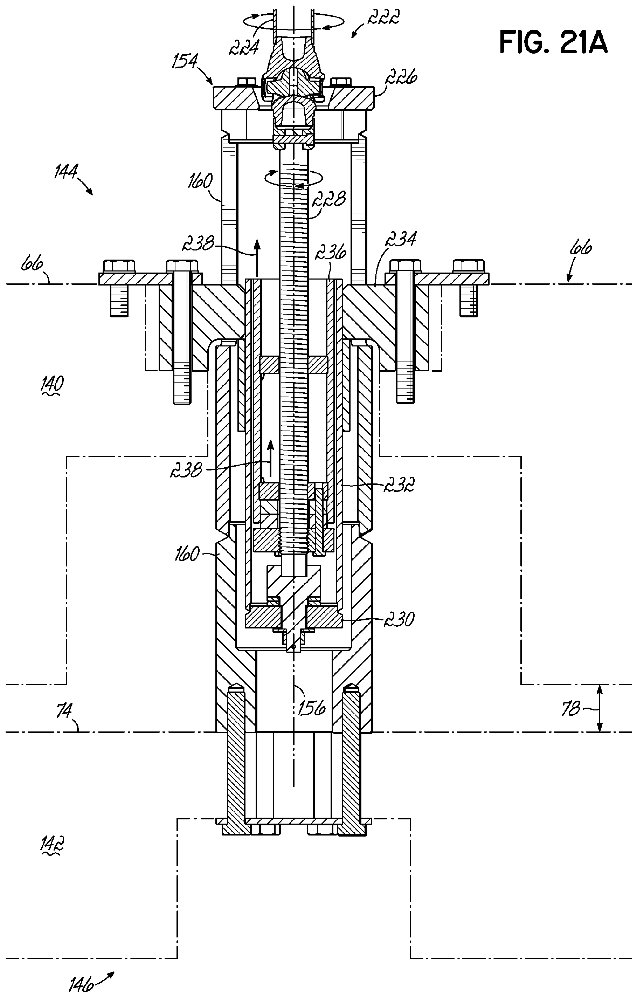

With reference to Fig. 21A, rotating the actuation rod 224 rotates the threaded shaft 228 and raises the stop element 236 from an unlocked position toward the locked position. The cap 226 is secured to the lower mass 74 via the guide beam 160, and the stop element 236 is secured to the upper mass 66 via the guide tube 232 and bracket 234. Therefore, raising the stop element 236 (attached to upper mass 66), as is depicted by vertical arrows 238 in Fig. 21A, sufficiently close to the cap 226 (attached to the lower mass 74) reduces the available vertical movement of the masses 66, 74 along the vertical motion axis 156. In Fig. 21C, the pins 250 slide with movement of the stop element 236 relative to the guide tube 232 in slots 252 between the locked and unlocked positions.

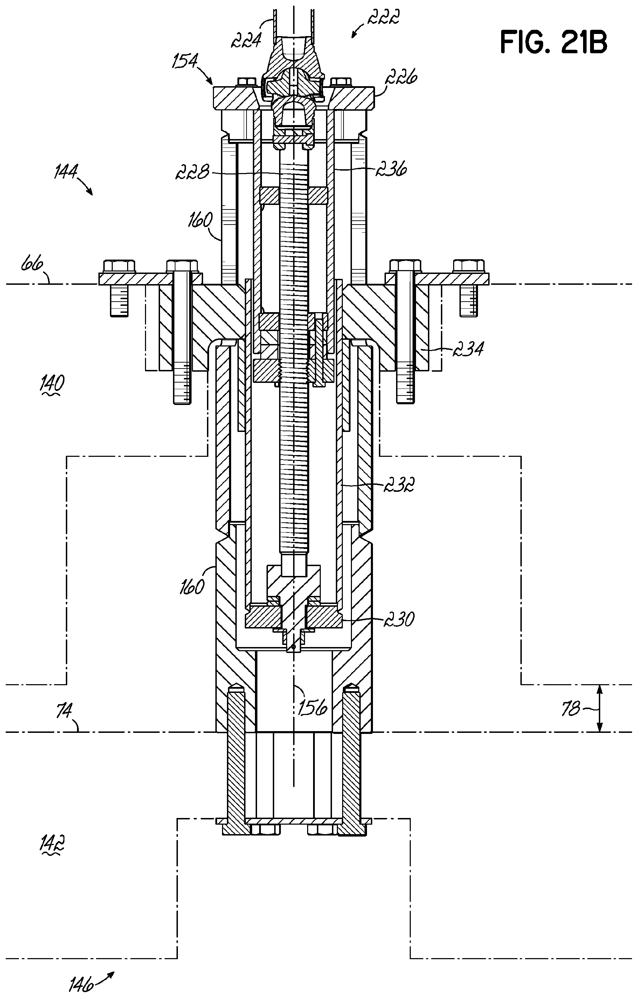

As shown in Fig. 21B, the locked position is reached when the stop element 236 abuts the cap 226. Vertical separation of the upper and lower masses 66, 74 is significantly reduced at the locked position. In the absence of available vertical space, horizontal motion away from the equilibrium position is significantly reduced to a threshold level which is safe for service personnel to approach the vibration damper 22. In the locked position, horizontal movement of the masses 66 and 74 is limited to less than ± 120 mm from equilibrium.

To substantially eliminate any remaining movement of the pendulums 144 and 146 after the locking mechanism 222 is engaged, service personnel may attach and tension soft links (e.g., chains 240 in Fig. 6) or similar to the lower mass 74 to prohibit any residual movement of the masses 66 and 74 and to support the locking mechanism 222 against tower vibrations while service personnel complete maintenance and/or repair. Reversing the process by removing the soft links 240 and moving the stop element 236 away from the cap 230 moves the locking mechanism 222 from the locked position (Fig. 21B) to the unlocked position (Fig. 21A) in which the pendulums 144 and 146 are free to oscillate.

Referring to Fig. 22, a mathematical model of the wind turbine 10 of Fig. 1 is shown. In the model, m is the generalized mass of the wind turbine 10, k is the generalized stiffness of the wind turbine 10, d is the generalized damping coefficient of the wind turbine 10, F is the modal excitation force, g is acceleration due to gravity, β is an angle of effective direction of gravity (g) and includes static tilt and dynamic tilt of the tower 18, q is displacement of the wind turbine 10, IP is the pendulum length of the pendulum rods 70, m₁ is the mass of the upper mass 66, m₂ is the mass of the lower mass 74, qᵣₑₗ is the relative displacement of the upper mass 66 and the lower mass 74 from equilibrium, z is the vertical displacement of the upper mass 66 and the lower mass 74 at qᵣₑₗ, kₜ is adjustment of the coil springs 202 of the end stop 170, k_{c} is the horizontal stiffness of the coupling mechanism 154, k_{end} is the vertical stiffness and damping of the end stop 170, d₁ is the generalized damping coefficient of the linear dampers, and d₂ is the generalized damping coefficient of the linear dampers. In the model, nonlinear effects due to large deflections of the tower 18 and the masses 66, 74 hitting the end stop 170 are taken into account.

While the present invention has been illustrated by a description of various preferred embodiments and while these embodiments have been described in some detail, it is not the intention of the Applicant to restrict or in any way limit the scope of the appended claims to such detail. Additional advantages and modifications will readily appear to those skilled in the art. Thus, the various features of the invention may be used alone or in any combination depending on the needs and preferences of the user.

## Claims

1. A tubular structure for forming at least a portion of a wind turbine tower (18) of a wind turbine (10), comprising:
an elongate tubular body having a first end, second end, and a tower wall (46) extending between the first end and the second end, wherein the first end is configured to be connected to a nacelle (24) of the wind turbine (10), and wherein the tower wall (46) defines a longitudinal axis (20) of the tubular body;
a vibration damper (22) having a central axis (64) and coupled to the tubular body; and **characterised by**
a tilt mechanism (88) operably coupled to the vibration damper (22) and configured to change an orientation of the central axis (64) of the vibration damper (22) relative to the longitudinal axis (20) of the tubular body.

2. The tubular structure of claim 1, wherein the tilt mechanism (88) comprises a lateral adjustment mechanism (106) configured to rotate the vibration damper (22) about an axis (107) perpendicular to the longitudinal axis (20).

3. The tubular structure of claim 1 or claim 2, wherein the longitudinal axis (20) defines a radial plane that intersects the vibration damper (22), and wherein the tilt mechanism (88) comprises a radial adjustment mechanism (104) configured to rotate the vibration damper (22) about an axis (105) perpendicular to the radial plane.

4. The tubular structure of any preceding claim, wherein a support assembly (57) is rigidly connected to the tubular structure and wherein the vibration damper (22) further comprises:
a frame assembly (56) slidably supported on the support assembly (57), wherein the tilt mechanism (88) is operably coupled to the frame assembly (56) and to the support assembly (57) whereby operation of the tilt mechanism (88) moves the frame assembly (56) relative to the support assembly (57).

5. The tubular structure of claim 4, wherein the frame assembly (56) is pivotally secured to the support assembly (57).

6. The tubular structure of claim 5, wherein the frame assembly (56) is pivotal in a plane in which the tilt mechanism (88) changes the orientation of the central axis (64).

7. The tubular structure of any of claims 4-6, wherein the tilt mechanism (88) is between the frame assembly (56) and the support assembly (57).

8. The tubular structure of any of claims 4-7, wherein the support assembly (57) defines a slide surface on which the frame assembly (56) is slidably supported, the slide surface (114) including an inner slide plane (120) that is perpendicular to the longitudinal axis (20) and first and second outer slide planes (118, 122) on opposing sides of the inner slide plane (120), each of the outer slide planes (118, 122) forming an obtuse angle with respect to the inner slide plane (120), and wherein slotted flanges (108, 110, 112) are pivotably secured to the frame assembly (56) and are in slidable engagement with each of the inner and outer slide planes (118, 120, 122).

9. The tubular structure of any of claims 4-8, wherein the tilt mechanism (88) comprises:
a pair of supports, with one of the supports coupled to the frame assembly (56) and the other one coupled to the support assembly (57), and
a threaded rod rotatably coupling the pair of supports together, whereby rotation of the threaded rod changes a distance between the pair of supports.

10. A wind turbine (10) comprising the tubular structure of any preceding claim.

11. A method of damping vibrations in a tubular structure configured to form at least a portion a wind turbine tower (18) of a wind turbine (10), the tubular structure having an elongate tubular body with a first end, second end, and a tower wall (46) extending between the first end and the second end, the tower wall (46) defining a longitudinal axis (20) of the tubular body, and a vibration damper (22) having a central axis (64) and connected to the tubular structure adjacent to the first end, the method comprising:
erecting the tubular structure so as to be supported at the second end of the tubular body, the longitudinal axis (20) of the erected tubular body having a first orientation; and
adjusting the vibration damper (22) relative to the tower wall (46) so that the central axis (64) of the vibration damper (22) has a second orientation relative to the longitudinal axis (20) of the tubular body different from the first orientation.

12. The method of claim 11, wherein adjusting the vibration damper (22) further comprises:
determining an orientation of the longitudinal axis (20) of the tubular body relative to gravity (68); and
rotating the central axis (64) of the vibration damper (22) toward the orientation of gravity (68).

13. The method of claim 12, wherein rotating the central axis (64) of the vibration damper (22) further comprises rotating the central axis (64) of the vibration damper (22) about an axis (107) perpendicular to the longitudinal axis (20).

14. The method of claim 12 or claim 13, wherein the longitudinal axis (20) defines a radial plane that intersects the vibration damper (22), and wherein rotating the central axis (64) of the vibration damper (22) further comprises rotating the vibration damper (22) about an axis (105) perpendicular to the radial plane.

15. The method of any of claims 12-14, wherein the tubular body includes a support assembly (57) and the vibration damper (22) includes a frame assembly (56), the frame assembly (56) being slidably supported on the support assembly (57), and wherein rotating the central axis (64) of the vibration damper (22) further comprises sliding the frame assembly (56) relative to the support assembly (57).

16. The method of claim 15, wherein a plurality of fasteners connect the frame assembly (56) to the support assembly (57) during operation of the vibration damper (22), and prior to rotating the central axis (64) of the vibration damper (22), the method further comprises:
loosening the plurality of fasteners; and
after sliding the frame assembly (56) relative to the support assembly (57), tightening the plurality of fasteners.

17. The method of claim 15 or claim 16, wherein a tilt mechanism (88) is operable between the support assembly (57) and the frame assembly (56), and wherein rotating the central axis (64) of the vibration damper (22) further comprises operating the tilt mechanism (88).

18. The method of claim 17, wherein the tilt mechanism (88) comprises:
a pair of supports, with one of the supports coupled to the frame assembly (56) and the other one coupled to the support assembly (57); and
a threaded rod rotatably coupled to the pair of supports, and
wherein sliding the frame assembly (56) relative to the support assembly (57) further comprises rotating the threaded rod to change a distance between the pair of supports.

## Patentansprüche

1. Röhrenförmige Struktur zum Bilden mindestens eines Abschnitts eines Windkraftanlagenturms (18) einer Windkraftanlage (10), umfassend:
einen länglichen röhrenförmigen Körper, der ein erstes Ende, zweites Ende und eine Turmwand (46) aufweist, die sich zwischen dem ersten Ende und dem zweiten Ende erstreckt, wobei das erste Ende so ausgelegt ist, dass es mit einer Gondel (24) der Windkraftanlage (10) verbunden werden kann, und wobei die Turmwand (46) eine Längsachse (20) des röhrenförmigen Körpers definiert;
einen Schwingungsdämpfer (22), der eine Mittelachse (64) aufweist und mit dem röhrenförmigen Körper gekoppelt ist; und **gekennzeichnet durch**
einen Neigemechanismus (88), der betriebsmäßig mit dem Schwingungsdämpfer (22) gekoppelt und so ausgelegt ist, dass er eine Ausrichtung der Mittelachse (64) des Schwingungsdämpfers (22) relativ zur Längsachse (20) des röhrenförmigen Körpers ändert.

2. Röhrenförmige Struktur nach Anspruch 1, wobei der Neigemechanismus (88) einen seitlichen Einstellmechanismus (106) umfasst, der so ausgelegt ist, dass er den Schwingungsdämpfer (22) um eine zur Längsachse (20) senkrechte Achse (107) dreht.

3. Röhrenförmige Struktur nach Anspruch 1 oder Anspruch 2, wobei die Längsachse (20) eine radiale Ebene definiert, die den Schwingungsdämpfer (22) schneidet, und wobei der Neigemechanismus (88) einen radialen Einstellmechanismus (104) umfasst, der so ausgelegt ist, dass er den Schwingungsdämpfer (22) um eine zur radialen Ebene senkrechte Achse (105) dreht.

4. Röhrenförmige Struktur nach einem vorstehenden Anspruch, wobei eine Trägerbaugruppe (57) starr mit der röhrenförmigen Struktur verbunden ist und wobei der Schwingungsdämpfer (22) weiter umfasst:
eine Rahmenbaugruppe (56), die verschiebbar auf der Trägerbaugruppe (57) gelagert ist, wobei der Neigemechanismus (88) betriebsmäßig mit der Rahmenbaugruppe (56) und mit der Trägerbaugruppe (57) gekoppelt ist, wodurch Betätigung des Neigemechanismus (88) die Rahmenbaugruppe (56) relativ zur Trägerbaugruppe (57) bewegt.

5. Röhrenförmige Struktur nach Anspruch 4, wobei die Rahmenbaugruppe (56) schwenkbar an der Trägerbaugruppe (57) gesichert ist.

6. Röhrenförmige Struktur nach Anspruch 5, wobei die Rahmenbaugruppe (56) in einer Ebene schwenkbar ist, in der der Neigemechanismus (88) die Ausrichtung der Mittelachse (64) ändert.

7. Röhrenförmige Struktur nach einem der Ansprüche 4-6, wobei sich der Neigemechanismus (88) zwischen der Rahmenbaugruppe (56) und der Trägerbaugruppe (57) befindet.

8. Röhrenförmige Struktur nach einem der Ansprüche 4-7, wobei die Trägerbaugruppe (57) eine Gleitfläche definiert, auf der die Rahmenbaugruppe (56) verschiebbar gelagert ist, wobei die Gleitfläche (114) eine innere Gleitebene (120), die zur Längsachse (20) senkrecht steht, und eine erste und eine zweite äußere Gleitebene (118, 122) auf gegenüberliegenden Seiten der inneren Gleitebene (120) beinhaltet, wobei jede der äußeren Gleitebenen (118, 122) einen stumpfen Winkel in Bezug auf die innere Gleitebene (120) bildet, und wobei geschlitzte Flansche (108, 110, 112) schwenkbar an der Rahmenbaugruppe (56) gesichert sind und mit jeder der inneren und der äußeren Gleitebenen (118, 120, 122) in verschiebbarem Eingriff stehen.

9. Röhrenförmige Struktur nach einem der Ansprüche 4-8, wobei der Neigemechanismus (88) umfasst:
ein Paar Träger, wobei einer der Träger mit der Rahmenbaugruppe (56) gekoppelt ist und der andere mit der Trägerbaugruppe (57) gekoppelt ist, und
eine Gewindestange, die das Trägerpaar drehbar miteinander koppelt, wodurch Drehung der Gewindestange einen Abstand zwischen dem Trägerpaar ändert.

10. Windkraftanlage (10), die die röhrenförmige Struktur nach einem vorstehenden Anspruch umfasst.

11. Verfahren zum Dämpfen von Schwingungen in einer röhrenförmigen Struktur, die so ausgelegt ist, dass sie mindestens einen Abschnitt eines Windkraftanlagenturms (18) einer Windkraftanlage (10) bildet, wobei die röhrenförmige Struktur einen länglichen röhrenförmigen Körper mit einem ersten Ende, zweiten Ende und einer Turmwand (46), die sich zwischen dem ersten Ende und dem zweiten Ende erstreckt, wobei die Turmwand (46) eine Längsachse (20) des röhrenförmigen Körpers definiert, und einen Schwingungsdämpfer (22) aufweist, der eine Mittelachse (64) aufweist und mit der röhrenförmigen Struktur an das erste Ende angrenzend verbunden ist, wobei das Verfahren umfasst:
Aufrichten der röhrenförmigen Struktur, sodass sie auf dem zweiten Ende des röhrenförmigen Körpers gelagert ist, wobei die Längsachse (20) des aufgerichteten röhrenförmigen Körpers eine erste Ausrichtung aufweist; und
Einstellen des Schwingungsdämpfers (22) relativ zur Turmwand (46), sodass die Mittelachse (64) des Schwingungsdämpfers (22) eine zweite Ausrichtung relativ zur Längsachse (20) des röhrenförmigen Körpers aufweist, die sich von der ersten Ausrichtung unterscheidet.

12. Verfahren nach Anspruch 11, wobei das Einstellen des Schwingungsdämpfers (22) weiter umfasst:
Bestimmen einer Ausrichtung der Längsachse (20) des röhrenförmigen Körpers relativ zur Schwerkraft (68); und
Drehen der Mittelachse (64) des Schwingungsdämpfers (22) in Richtung der Ausrichtung der Schwerkraft (68).

13. Verfahren nach Anspruch 12, wobei das Drehen der Mittelachse (64) des Schwingungsdämpfers (22) weiter das Drehen der Mittelachse (64) des Schwingungsdämpfers (22) um eine zur Längsachse (20) senkrechte Achse (107) umfasst.

14. Verfahren nach Anspruch 12 oder Anspruch 13, wobei die Längsachse (20) eine radiale Ebene definiert, die den Schwingungsdämpfer (22) schneidet, und wobei das Drehen der Mittelachse (64) des Schwingungsdämpfers (22) weiter das Drehen des Schwingungsdämpfers (22) um eine zur radialen Ebene senkrechte Achse (105) umfasst.

15. Verfahren nach einem der Ansprüche 12-14, wobei der röhrenförmige Körper eine Trägerbaugruppe (57) beinhaltet und der Schwingungsdämpfer (22) eine Rahmenbaugruppe (56) beinhaltet, wobei die Rahmenbaugruppe (56) verschiebbar auf der Trägerbaugruppe (57) gelagert ist, und wobei das Drehen der Mittelachse (64) des Schwingungsdämpfers (22) weiter das Verschieben der Rahmenbaugruppe (56) relativ zur Trägerbaugruppe (57) umfasst.

16. Verfahren nach Anspruch 15, wobei während des Betriebs des Schwingungsdämpfers (22) eine Vielzahl von Befestigungselementen die Rahmenbaugruppe (56) mit der Trägerbaugruppe (57) verbindet, und das Verfahren vor dem Drehen der Mittelachse (64) des Schwingungsdämpfers (22) weiter umfasst:
Lösen der Vielzahl von Befestigungselementen; und
Festziehen der Vielzahl von Befestigungselementen nach dem Verschieben der Rahmenbaugruppe (56) relativ zur Trägerbaugruppe (57).

17. Verfahren nach Anspruch 15 oder Anspruch 16, wobei ein Neigemechanismus (88) zwischen der Trägerbaugruppe (57) und der Rahmenbaugruppe (56) betätigt werden kann und wobei das Drehen der Mittelachse (64) des Schwingungsdämpfers (22) weiter das Betätigen des Neigemechanismus (88) umfasst.

18. Verfahren nach Anspruch 17, wobei der Neigemechanismus (88) umfasst:
ein Paar Träger, wobei einer der Träger mit der Rahmenbaugruppe (56) gekoppelt ist und der andere mit der Trägerbaugruppe (57) gekoppelt ist; und
eine Gewindestange, die drehbar mit dem Trägerpaar gekoppelt ist, und
wobei das Verschieben der Rahmenbaugruppe (56) relativ zur Trägerbaugruppe (57) weiter das Drehen der Gewindestange umfasst, um einen Abstand zwischen dem Trägerpaar zu ändern.

## Revendications

1. Structure tubulaire destinée à former au moins une partie d'une tour éolienne (18) d'une éolienne (10), comprenant :
un corps tubulaire allongé présentant une première extrémité, une seconde extrémité et une paroi de tour (46) s'étendant entre la première extrémité et la seconde extrémité, dans laquelle la première extrémité est configurée pour être raccordée à une nacelle (24) de l'éolienne (10), et dans laquelle la paroi de tour (46) définit un axe longitudinal (20) du corps tubulaire ;
un amortisseur de vibrations (22) présentant un axe central (64) et couplé au corps tubulaire ; et **caractérisée par**
un mécanisme d'inclinaison (88) couplé fonctionnellement à l'amortisseur de vibrations (22) et configuré pour modifier une orientation de l'axe central (64) de l'amortisseur de vibrations (22) par rapport à l'axe longitudinal (20) du corps tubulaire.

2. Structure tubulaire selon la revendication 1, dans laquelle le mécanisme d'inclinaison (88) comprend un mécanisme de réglage latéral (106) configuré pour faire tourner l'amortisseur de vibrations (22) autour d'un axe (107) perpendiculaire à l'axe longitudinal (20).

3. Structure tubulaire selon la revendication 1 ou la revendication 2, dans laquelle l'axe longitudinal (20) définit un plan radial qui coupe l'amortisseur de vibrations (22), et dans laquelle le mécanisme d'inclinaison (88) comprend un mécanisme de réglage radial (104) configuré pour faire tourner l'amortisseur de vibrations (22) autour d'un axe (105) perpendiculaire au plan radial.

4. Structure tubulaire selon une quelconque revendication précédente, dans laquelle un ensemble support (57) est solidarisé à la structure tubulaire et dans laquelle l'amortisseur de vibrations (22) comprend en outre :
un ensemble cadre (56) supporté de manière coulissante sur l'ensemble support (57), dans laquelle le mécanisme d'inclinaison (88) est couplé fonctionnellement à l'ensemble cadre (56) et à l'ensemble support (57), selon laquelle le fonctionnement du mécanisme d'inclinaison (88) déplace l'ensemble cadre (56) par rapport à l'ensemble support (57).

5. Structure tubulaire selon la revendication 4, dans laquelle l'ensemble cadre (56) est fixé de manière pivotante à l'ensemble support (57).

6. Structure tubulaire selon la revendication 5, dans laquelle l'ensemble cadre (56) est pivotant dans un plan dans lequel le mécanisme d'inclinaison (88) modifie l'orientation de l'axe central (64).

7. Structure tubulaire selon l'une quelconque des revendications 4-6, dans laquelle le mécanisme d'inclinaison (88) se trouve entre l'ensemble cadre (56) et l'ensemble support (57).

8. Structure tubulaire selon l'une quelconque des revendications 4-7, dans laquelle l'ensemble support (57) définit une surface de glissement sur laquelle l'ensemble cadre (56) est supporté de manière coulissante, la surface de glissement (114) incluant un plan de glissement intérieur (120) qui est perpendiculaire à l'axe longitudinal (20) et des premier et second plans de glissement extérieurs (118, 122) sur les côtés opposés du plan de glissement intérieur (120), chacun des plans de glissement extérieurs (118, 122) formant un angle obtus par rapport au plan de glissement intérieur (120), et dans laquelle des brides fendues (108, 110, 112) sont fixées de manière pivotante à l'ensemble cadre (56) et sont en prise coulissante avec chacun des plans de glissement intérieur et extérieurs (118, 120, 122).

9. Structure tubulaire selon l'une quelconque des revendications 4-8, dans laquelle le mécanisme d'inclinaison (88) comprend :
une paire de supports, l'un des supports étant couplé à l'ensemble cadre (56) et l'autre étant couplé à l'ensemble support (57), et
une tige filetée couplant de manière rotative la paire de supports ensemble, selon laquelle la rotation de la tige filetée modifie une distance entre la paire de supports.

10. Éolienne (10) comprenant la structure tubulaire selon une quelconque revendication précédente.

11. Procédé d'amortissement des vibrations dans une structure tubulaire configurée pour former au moins une partie d'une tour éolienne (18) d'une éolienne (10), la structure tubulaire présentant un corps tubulaire allongé présentant une première extrémité, une seconde extrémité et une paroi de tour (46) s'étendant entre la première extrémité et la seconde extrémité, la paroi de tour (46) définissant un axe longitudinal (20) du corps tubulaire, et un amortisseur de vibrations (22) présentant un axe central (64) et raccordé à la structure tubulaire adjacente à la première extrémité, le procédé comprenant :
le montage de la structure tubulaire de manière à être supportée au niveau de la seconde extrémité du corps tubulaire, l'axe longitudinal (20) du corps tubulaire monté présentant une première orientation ; et
le réglage de l'amortisseur de vibrations (22) par rapport à la paroi de tour (46) de sorte que l'axe central (64) de l'amortisseur de vibrations (22) présente une seconde orientation par rapport à l'axe longitudinal (20) du corps tubulaire, différente de la première orientation.

12. Procédé selon la revendication 11, dans lequel le réglage de l'amortisseur de vibrations (22) comprend en outre :
la détermination d'une orientation de l'axe longitudinal (20) du corps tubulaire par rapport à la gravité (68) ; et
la rotation de l'axe central (64) de l'amortisseur de vibrations (22) vers l'orientation de la gravité (68).

13. Procédé selon la revendication 12, dans lequel la rotation de l'axe central (64) de l'amortisseur de vibrations (22) comprend en outre la rotation de l'axe central (64) de l'amortisseur de vibrations (22) autour d'un axe (107) perpendiculaire à l'axe longitudinal (20).

14. Procédé selon la revendication 12 ou la revendication 13, dans lequel l'axe longitudinal (20) définit un plan radial qui coupe l'amortisseur de vibrations (22), et dans lequel la rotation de l'axe central (64) de l'amortisseur de vibrations (22) comprend en outre la rotation de l'amortisseur de vibrations (22) autour d'un axe (105) perpendiculaire au plan radial.

15. Procédé selon l'une quelconque des revendications 12-14, dans lequel le corps tubulaire inclut un ensemble support (57) et l'amortisseur de vibrations (22) inclut un ensemble cadre (56), l'ensemble cadre (56) étant supporté de manière coulissante sur l'ensemble support (57), et dans lequel la rotation de l'axe central (64) de l'amortisseur de vibrations (22) comprend en outre le coulissement de l'ensemble cadre (56) par rapport à l'ensemble support (57).

16. Procédé selon la revendication 15, dans lequel une pluralité d'éléments de fixation raccordent l'ensemble cadre (56) à l'ensemble support (57) pendant le fonctionnement de l'amortisseur de vibrations (22), et avant la rotation de l'axe central (64) de l'amortisseur de vibrations (22), le procédé comprend en outre :
le desserrage de la pluralité d'éléments de fixation ; et
après avoir fait coulisser l'ensemble cadre (56) par rapport à l'ensemble support (57), le serrage de la pluralité d'éléments de fixation.

17. Procédé selon la revendication 15 ou la revendication 16, dans lequel un mécanisme d'inclinaison (88) peut être actionné entre l'ensemble support (57) et l'ensemble cadre (56), et dans lequel la rotation de l'axe central (64) de l'amortisseur de vibrations (22) comprend en outre l'actionnement du mécanisme d'inclinaison (88).

18. Procédé selon la revendication 17, dans lequel le mécanisme d'inclinaison (88) comprend :
une paire de supports, l'un des supports étant couplé à l'ensemble cadre (56) et l'autre étant couplé à l'ensemble support (57) ; et
une tige filetée couplée de manière rotative à la paire de supports, et
dans lequel le coulissement de l'ensemble cadre (56) par rapport à l'ensemble support (57) comprend en outre la rotation de la tige filetée pour modifier une distance entre la paire de supports.
